(19) **Europäisches Patentamt / European Patent Office / Office européen des brevets**

(11) **EP 3 561 910 B1**

(12) # EUROPEAN PATENT SPECIFICATION

(45) Date of publication and mention
of the grant of the patent:
**19.08.2020  Bulletin 2020/34**

(21) Application number: **17883103.8**

(22) Date of filing: **19.12.2017**

(51) Int Cl.:
*H01M 4/13* *(2010.01)*          *H01M 4/133* *(2010.01)*
*H01M 4/134* *(2010.01)*        *H01M 4/36* *(2006.01)*
*H01M 4/38* *(2006.01)*          *H01M 4/48* *(2010.01)*
*H01M 4/587* *(2010.01)*        *H01M 4/40* *(2006.01)*
*H01M 10/0525* *(2010.01)*

(86) International application number:
**PCT/JP2017/045487**

(87) International publication number:
**WO 2018/117088 (28.06.2018 Gazette 2018/26)**

(54) **LITHIUM-ION BATTERY NEGATIVE ELECTRODE**

NEGATIVELEKTRODE FÜR LITHIUM-IONEN-BATTERIE

ÉLECTRODE NÉGATIVE DE BATTERIE LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2016   JP 2016247001
13.12.2017   JP 2017238952**

(43) Date of publication of application:
**30.10.2019   Bulletin 2019/44**

(73) Proprietor: **Nissan Motor Co., Ltd.
Yokohama-shi, Kanagawa 221-0023 (JP)**

(72) Inventors:
• **MIZUNO, Yusuke
Kyoto-shi
Kyoto 605-0995 (JP)**
• **SHOJI, Naofumi
Kyoto-shi
Kyoto 605-0995 (JP)**
• **OHSAWA, Yasuhiko
Atsugi-shi
Kanagawa 243-0123 (JP)**
• **KUSACHI, Yuki
Atsugi-shi
Kanagawa 243-0123 (JP)**
• **SATOU, Hajime
Atsugi-shi
Kanagawa 243-0123 (JP)**
• **AKAMA, Hiroshi
Atsugi-shi
Kanagawa 243-0123 (JP)**
• **HORIE, Hideaki
Atsugi-shi
Kanagawa 243-0123 (JP)**

(74) Representative: **Grünecker Patent- und
Rechtsanwälte
PartG mbB
Leopoldstraße 4
80802 München (DE)**

(56) References cited:
WO-A1-2012/140790      WO-A1-2013/183187
WO-A1-2015/137041      WO-A1-2016/035289
WO-A1-2016/158187      JP-A- 2013 137 887
JP-A- 2013 243 117        JP-A- 2015 156 293
JP-A- 2016 066 529        JP-A- 2016 186 914
US-A1- 2012 189 913

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to a negative electrode for a lithium ion battery.

**BACKGROUND ART**

In recent years, there has been a strong demand for a reduction of an amount of carbon dioxide emission for environmental protection. In automobile industry, expectations have been attracted to the reduction of the amount of carbon dioxide emission caused by introduction of an electric vehicle (EV) or a hybrid electric vehicle (HEV), and the development of a secondary battery for motor driving, which serves as a key to practical use thereof, is being assiduously carried out. As the secondary battery, attention has been paid to a lithium ion battery which can achieve high energy density and high output density.

For increasing energy density of a lithium ion battery, attention has been paid to a silicon-based material (silicon, a silicon compound, and the like) having a larger theoretical capacity than a carbon material which has been conventionally used as a negative electrode active material. However, when a silicon-based material is used as a negative electrode active material, a volume change of the material between charging and discharging is large. Due to the volume change, the silicon-based material itself is easily disintegrated or peeled off from a surface of a current collector, so that it is difficult to improve cycle characteristics.

For example, JP 2016-103337 A, US 2012/189913 A1, WO 2016/035289 A1 and JP 2016-066529 A disclose lithium ion batteries which suppress expansion of a negative electrode by adjusting a mixing ratio of carbon and at least one of silicon and a silicon compound and particle diameters thereof within a predetermined range.

**SUMMARY OF INVENTION**

Technical Problem Solved by the Invention

However, since a binding agent is used in the negative electrodes described in JP 2016-103337 A, US 2012/189913 A1, WO 2016/035289 A1 and JP 2016-066529 A, when a thickness of the electrode excessively increases, a problem arises in that a negative electrode active material is peeled off from a surface of a negative electrode current collector. Further, since a proportion of the active material is decreased by the amount of the binding agent used, a problem arises in that energy density is reduced. Furthermore, expansion and shrinkage of silicon and the silicon compound is restricted by the binding agent so that the negative electrode active material itself is easily disintegrated. Moreover, the effect of suppressing the expansion of the negative electrode at the time of charging is also not sufficient, and there is a room for further improvement.

The present invention has been made in view of the above-described problems, and an object thereof is to provide a negative electrode for a lithium ion battery which is excellent in energy density and cycle characteristics and has a small volume change at the time of charging.

Means to Solve the Problems

The present inventors have conducted intensive studies in order to solve the above-described problems, and as a result, have reached the present invention.

That is, the present invention relates to a negative electrode for a lithium ion battery comprising a negative electrode active material layer, in which the negative electrode active material layer includes a non-bound body of a mixture containing silicon and/or silicon compound particles and carbon-based negative electrode active material particles, a volume average particle size of the silicon and/or silicon compound particles is 0.01 to 10 μm, a volume average particle size of the carbon-based negative electrode active material particles is 15 to 50 μm, and a mass mixing ratio of a total amount of the silicon and silicon compound particles and an amount of the carbon-based negative electrode active material particles contained in the mixture is 5 : 95 to 45 : 55.

**BRIEF DESCRIPTION OF DRAWINGS**

[Fig. 1] Fig. 1 is a cross-sectional view schematically illustrating an example of a negative electrode for a lithium ion battery of the present invention.

[Fig. 2] Fig. 2 is a cross-sectional view schematically illustrating a state in which particles of silicon and/or a silicon compound are expanded by charging in the negative electrode for a lithium ion battery illustrated in Fig. 1.

## EMBODIMENTS FOR CARRYING OUT THE INVENTION

Hereinafter, the present invention will be described in detail.

The negative electrode for a lithium ion battery of the present invention is a negative electrode for a lithium ion battery having a negative electrode active material layer, in which the negative electrode active material layer comprises a non-bound body of a mixture containing silicon and/or silicon compound particles and carbon-based negative electrode active material particles, a volume average particle size of the silicon and/or silicon compound particles is 0.01 to 10 $\mu$m, a volume average particle size of the carbon-based negative electrode active material particles is 15 to 50 $\mu$m, and a mass mixing ratio of a total amount of the silicon and silicon compound particles and an amount of the carbon-based negative electrode active material particles contained in the mixture is 5 : 95 to 45 : 55. The negative electrode for a lithium ion battery of the present invention having such features is excellent in energy density and cycle characteristics and has a small volume change at the time of charging.

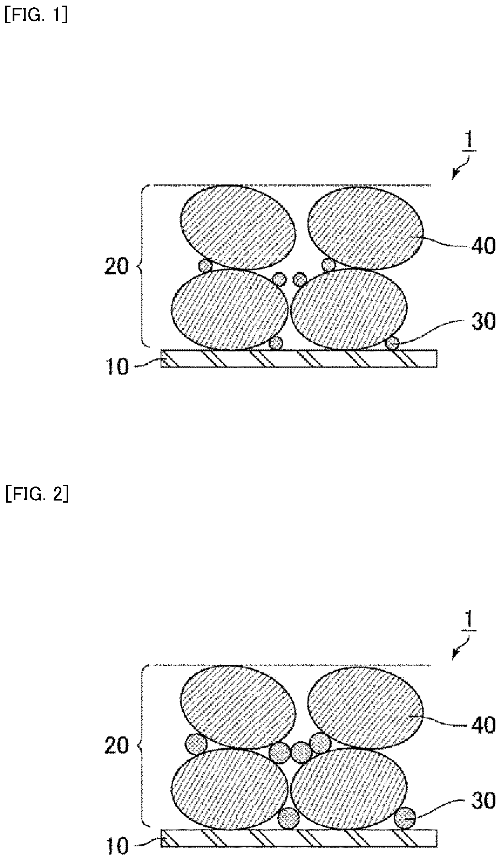

The configuration of the negative electrode for a lithium ion battery of the present invention will be described using Fig. 1.

Fig. 1 is a cross-sectional view schematically illustrating an example of a negative electrode for a lithium ion battery of the present invention.

As illustrated in Fig. 1, a negative electrode for a lithium ion battery 1 comprises a negative electrode active material layer 20 disposed on a negative electrode current collector 10.

The negative electrode active material layer 20 comprises a non-bound body of a mixture containing silicon and/or silicon compound particles 30 and carbon-based negative electrode active material particles 40.

The silicon particles may be particles of crystalline silicon, particles of amorphous silicon, or mixtures thereof.

As the silicon compound particles, for example, particles of at least one selected from the group consisting of silicon oxide ($SiO_x$), carbon-coated silicon oxide (see "Production of carbon-coated silicon oxide particles" of Production Example 5), a Si-C complex, a Si-Al alloy, a Si-Li alloy, a Si-Ni alloy, a Si-Fe alloy, a Si-Ti alloy, a Si-Mn alloy, a Si-Cu alloy, and a Si-Sn alloy are preferred.

Examples of the Si-C complex include silicon carbide particles, particles having a surface of carbon particles coated with silicon and/or silicon carbide, particles having a surface of silicon particles coated with carbon and/or silicon carbide, and the like. In the case of particles having a surface of carbon particles coated with silicon and/or silicon carbide or particles having a surface of silicon particles coated with carbon and/or silicon carbide, a polymer compound may be used in combination for the coating. Examples of particles having a surface of silicon particles coated with carbon include silicon compound particles which comprise a coating layer containing a polymer compound and carbon (conductive material; conductive agent) formed on a surface of silicon particles, and the like. Incidentally, the polymer compound and the coating layer are the same as described in the following section "Carbon-based negative electrode active material particles".

The silicon and/or silicon compound particles may be aggregated to form composite particles (that is, secondary particles obtained by aggregating primary particles). For example, composite particles (secondary particles) in which silicon compound particles (primary particles), which comprises a coating layer containing a polymer compound and carbon (conductive material; conductive agent) formed on a surface of silicon particles, are aggregated, and the like are exemplified (see "Production of silicon composite particles" of Production Example 6). Examples of a method of forming composite particles include a method of mixing primary particles of silicon and/or silicon compound particles and a polymer compound (coating resin) or the like to be described later.

The volume average particle size of the silicon and/or silicon compound particles is 0.01 to 10 $\mu$m. The volume average particle size thereof is preferably 0.05 to 5.0 $\mu$m and more preferably 0.5 to 2.0 $\mu$m. The volume average particle size of the silicon and/or silicon compound particles is measured by the following method, and in the case where composite particles are formed, the volume average particle size (secondary particle size) of the composite particles is obtained as the volume average particle size.

As described later, the particle size of the silicon and/or silicon compound particles is smaller than the particle size of the carbon-based negative electrode active material particles, and this shows a relation that the particles of the silicon and/or silicon compound can enter a space between the particles of the carbon-based negative electrode active material at the time of being expanded.

In the negative electrode active material layer, the silicon and/or silicon compound particles and the carbon-based negative electrode active material particles do not form a composite and exist as respective particles. The silicon and/or silicon compound particles enter a space(s) between the carbon-based negative electrode active material particles, and the silicon and/or silicon compound particles expands within the space(s) (expansion occurs within the space (s)), so that the expansion does not affect the volume change of the negative electrode active material layer.

As the silicon and/or silicon compound particles used in the present invention, commercially available particles having the above-described volume average particle size may be used, or commercially available particles may be sieved to have a desired volume particle size and then used.

As the carbon-based negative electrode active material particles, carbon-based materials [for example, graphite, non-graphitizable carbon, amorphous carbon, a resin calcined body (for example, a product obtained by calcining a phenolic resin, a furan resin, and the like to be carbonized, or the like), cokes (for example, pitch coke, needle coke, petroleum coke, and the like)], or particles of mixtures of a carbon-based material with an electroconductive polymer (for example, polyacetylene, polypyrrole, and the like), a metal oxide (titanium oxide and lithium titanium oxide), a metal alloy (a lithium-tin alloy, a lithium-aluminum alloy, an aluminum-manganese alloy, and the like), and the like may be exemplified. Among the carbon-based negative electrode active material particles, particles containing no lithium or lithium ions therein, a part or all of the inside of the particles may be pre-doped to contain lithium or lithium ions.

The volume average particle size of the carbon-based negative electrode active material particles is 15 to 50 $\mu$m. The volume average particle size thereof is preferably 15 to 25 $\mu$m, more preferably 17 to 23 $\mu$m, and even more preferably 18 to 20 $\mu$m.

In the present description, the volume average particle size of silicon and silicon compound particles, and the carbon-based negative electrode active material particles means a particle diameter (Dv50) at a cumulative value of 50% in a particle size distribution obtained by a Microtrac method (laser diffraction and scattering method). The Microtrac method is a method for obtaining a particle size distribution by utilizing scattered light that is obtained by irradiating particles with laser light. Incidentally, Microtrac manufactured by NIKKISO CO., LTD. or the like can be used in measuring the volume average particle size.

In the negative electrode for a lithium ion battery of the present invention, the negative electrode active material layer contains a non-bound body of a mixture containing silicon and/or silicon compound particles and carbon-based negative electrode active material particles.

Herein, the non-bound body of the mixture means that positions of the silicon and/or silicon compound particles and the carbon-based negative electrode active material particles are not fixed to each other by a binding agent (also called a binder).

In other words, the non-bound body means that the negative electrode active material layer does not contain a binding agent.

Since a negative electrode active material layer in a conventional lithium ion battery is produced by applying a slurry, having silicon and/or silicon compound particles, carbon-based negative electrode active material particles, and a binding agent dispersed in a solvent, to a surface of a negative electrode current collector or the like, and heating and drying the slurry, the negative electrode active material layer is in a state of being solidified by the binding agent. At this time, the negative electrode active materials are fixed to each other by the binding agent, and the positions of the silicon and/or silicon compound particles and the carbon-based negative electrode active material particles are fixed. Further, when the negative electrode active material layer is solidified by the binding agent, excessive stress is applied to the silicon and/or silicon compound particles due to expansion and shrinkage at the time of charging and discharging, so that the silicon and/or silicon compound particles are easily disintegrated.

Furthermore, since the negative electrode active material layer is fixed to the surface of the negative electrode current collector by the binding agent, cracks may occur in the negative electrode active material layer solidified by the binding agent due to expansion and shrinkage of the silicon and/or silicon compound particles at the time of charging and discharging, or the negative electrode active material layer may be peeled off or dropped out from the surface of the negative electrode current collector.

Incidentally, in the present description, the binding agent which the negative electrode active material layer does not contain means a conventional solvent dry type or dispersion medium dry type binding agent for a lithium ion battery that has been used for bonding and fixing negative electrode active material particles together, or negative electrode active material particles with a current collector. Examples thereof include starch, polyvinylidene fluoride, polyvinyl alcohol, carboxymethyl cellulose, polyvinyl pyrolidone, tetrafluoroethylene, styrene-butadiene rubber, and the like. These binding agents for a lithium ion battery are used by being dissolved or dispersed in water or an organic solvent, and firmly fix negative electrode active material particles together, or negative electrode active material particles with a current collector by volatilizing a solvent component (or a dispersion medium component) to be dried and solidified. Incidentally, the negative electrode active material particles as used herein include both silicon and/or silicon compound particles and carbon-based negative electrode active material particles.

On the other hand, in the negative electrode active material layer that constitutes the negative electrode for a lithium ion battery of the present invention, respective components (the silicon and/or silicon compound particles and the carbon-based negative electrode active material particles) in the negative electrode active material are not bound to each other and the positions thereof are not fixed.

Further, the volume average particle size of the carbon-based negative electrode active material particles is large as of 15 to 50 $\mu$m, and the volume average particle size of the silicon and/or silicon compound particles is small as of 0.01 to 10 μm.

When the particle size of the silicon and/or silicon compound particles is smaller than the particle size of the carbon-based negative electrode active material particles as described above, the silicon and/or silicon compound particles can enter a gap(s) between the carbon-based negative electrode active material particles.

As the carbon-based negative electrode active material particles used in the present invention, commercially available carbon-based negative electrode active material particles having the above-described volume average particle size may be used, or commercially available carbon-based negative electrode active material particles may be sieved to have a desired volume particle size and then used.

Fig. 2 is a cross-sectional view schematically illustrating a state in which silicon and/or silicon compound particles are expanded by charging in the negative electrode for a lithium ion battery illustrated in Fig. 1.

As illustrated in Fig. 2, the silicon and/or silicon compound particles 30 can enter space between the carbon-based negative electrode active material particles 40. Further, since the position of the silicon and/or silicon compound particles is not fixed by a binding agent, the expanded silicon and/or silicon compound particles 30 can be optimally positioned in the space between the carbon-based negative electrode active material particles 40. Therefore, an expansion amount of the silicon and/or silicon compound particles is not directly reflected as an expansion amount of the electrode, to decrease a volume change amount of the entire negative electrode for a lithium ion battery 1.

Since expansion and shrinkage of silicon and/or silicon compound particles at the time of charging and discharging are not restricted by a binding agent, self-disintegration of the silicon and/or silicon compound particles can be suppressed. Further, since the negative electrode active material layer that constitutes the negative electrode for a lithium ion battery of the present invention is not fixed onto a surface of a negative electrode current collector by the binding agent, cracks do not occur in the negative electrode active material layer due to expansion and shrinkage of the silicon and/or silicon compound particles at the time of charging and discharging, and the negative electrode active material layer is not peeled off. Therefore, degradation in cycle characteristics can be suppressed.

Thus, the negative electrode for a lithium ion battery of the present invention is excellent in energy density and cycle characteristics.

Since a silicon and/or silicon compound particle having a large theoretical capacity is contained in the negative electrode active material layer, the negative electrode for a lithium ion battery is excellent in energy density.

A mass mixing ratio of a total amount of the silicon and silicon compound particles and an amount of the carbon-based negative electrode active material particles is 5 : 95 to 45 : 55. When the mass mixing ratio is out of the range of 5 : 95 to 45 : 55, energy density is not sufficient or the volume expansion of the negative electrode active material layer at the time of charging excessively increases.

The mass mixing ratio of the total amount of the silicon and silicon compound particles and the amount of the carbon-based negative electrode active material particles is more preferably 5 : 95 to 30 : 70. When the mass mixing ratio is within the above range, the effect of increasing energy density by the silicon and/or silicon compound particles could be sufficient. Further, volume expansion of the negative electrode active material layer at the time of charging does not excessively increase.

A thickness of the negative electrode active material layer is not particularly limited, but is preferably 100 to 1500 μm, more preferably 200 to 800 μm, and even more preferably 300 to 500 μm.

By adjusting the thickness of the negative electrode active material layer within the above range, a thicker electrode can be obtained as compared to a conventional negative electrode, to increase an amount of an active material contained in a negative electrode. Further, since energy density also increases when a silicon and/or silicon compound particle is contained in a negative electrode active material layer, a negative electrode having a high energy density and a high capacity can be obtained.

The thickness of a negative electrode active material layer is regarded as a thickness before the negative electrode active material layer is subjected to charging or when the negative electrode active material layer is discharged to an electrode potential value + 0.05 V (vs. Li/Li+) or less.

The carbon-based negative electrode active material particles contained in the negative electrode active material layer may be carbon-based negative electrode active material particles themselves, or may be carbon-based coated negative electrode active material particles having a coating layer formed from a coating resin composition containing a polymer compound on at least a part of a surface of a carbon-based negative electrode active material particle, but are preferably carbon-based coated negative electrode active material particles.

When the carbon-based negative electrode active material particles are carbon-based coated negative electrode active material particles, a volume average particle size thereof is determined by a particle size of carbon-based negative electrode active material particles themselves which contains no coating layer formed from a coating resin composition. That is, the volume average particle size of the carbon-based negative electrode active material particles is determined as a volume average particle size of carbon-based negative electrode active material particles themselves even in any cases.

A ratio of a weight of the polymer compound to a weight of the carbon-based coated negative electrode active material particles is not particularly limited, but is preferably 0.01 to 20% by mass.

The coating layer formed from a coating resin composition contains a polymer compound. Further, if necessary, the coating layer may further contain a conductive material to be described later.

The carbon-based coated negative electrode active material particles have a coating layer formed from a coating resin composition containing a polymer compound on at least a part of a surface of a carbon-based negative electrode active material particle. In the negative electrode active material layer, even when the carbon-based coated negative electrode active material particles are in contact with each other, the coating resin compositions are not irreversibly attached to each other in the contact surface, attachment is temporary, and the coating resin compositions can be easily loosened by a hand. Therefore, the carbon-based coated negative electrode active material particles are not fixed by the coating resin composition. Thus, in a negative electrode active material layer containing carbon-based coated negative electrode active material particles, the carbon-based negative electrode active material particles are not bonded to each other.

More specifically, it is possible to confirm whether a negative electrode active material layer is a non-bound body (contains a binding agent) or not by completely immersing a negative electrode active material layer in an electrolyte solution to observe whether the negative electrode active material layer is disintegrated or not. When a negative electrode active material layer is a bound body containing a binding agent, a shape thereof can be maintained for one minute or longer, while when a negative electrode active material layer is a non-bound body containing no binding agents, a shape thereof is disintegrated in shorter than one minute.

As the polymer compound that constitutes the coating resin composition, a thermoplastic resin, a thermosetting resin, and the like are mentioned, and preferred examples thereof include an acrylic resin, a urethane resin, a silicone resin, and a butadiene-based resin [a styrene-butadiene copolymer resin or a butadiene polymer {butadiene rubber, liquid polybutadiene, and the like}]. These resins can form an elastic body to follow volume change of an active material, which is preferable.

Among these, a polymer compound having a liquid absorption ratio at the time of being immersed in an electrolyte solution of 10% or more and having a tensile elongation at break in a state of saturated liquid absorption of 10% or more is more preferred.

The liquid absorption ratio at the time of being immersed in an electrolyte solution is obtained by the following formula, by measuring a weight of a polymer compound before being immersed and after being immersed in an electrolyte solution.

[Math. 1]

$$\text{Liquid absorption ratio (\%)}$$
$$= [(\text{Weight of polymer compound after being immersed in electrolyte solution} - \text{Weight of polymer compound before being immersed in electrolyte solution})/\text{Weight of polymer compound before being immersed in electrolyte solution}] \times 100$$

As the electrolyte solution for obtaining the liquid absorption ratio, it is preferable to use an electrolyte solution having $LiPF_6$ as an electrolyte dissolved at a concentration of 1 M (mol/L) in a mixed solvent obtained by mixing ethylene carbonate (EC) and propylene carbonate (PC) at a volume ratio of EC : PC = 1 : 1.

Immersion in the electrolyte solution in determining the liquid absorption ratio is carried out for 3 days at 50°C. By performing immersion for 3 days at 50°C, the polymer compound is brought into a state of saturated liquid absorption. Incidentally, the state of saturated liquid absorption refers to a state in which a mass of a polymer compound does not increase even if the polymer compound is immersed in an electrolyte solution for a longer time.

Incidentally, the electrolyte solution used at the time of producing a lithium ion battery using the negative electrode for a lithium ion battery of the present invention is not limited to the above-described electrolyte solution, and another electrolyte solution may be used.

When the liquid absorption ratio is 10% or more, lithium ions can easily permeate through the polymer compound, and thus ion resistance can be maintained to be low in the negative electrode active material layer.

The liquid absorption ratio is preferably 20% or more and more preferably 30% or more.

Further, a preferred upper limit of the liquid absorption ratio is 400%, and a more preferred upper limit is 300%.

Tensile elongation at break in a state of saturated liquid absorption can be measured according to ASTM D683 (specimen shape Type II) by punching a polymer compound into a dumbbell shape, immersing the punched polymer compound in an electrolyte solution for 3 days at 50°C similarly to the measurement of the liquid absorption ratio, thereby bringing the polymer compound into a state of saturated liquid absorption. The tensile elongation at break is a value obtained by calculating an elongation ratio until the specimen breaks during a tensile test, by the following formula.

[Math. 2]

Tensile elongation at break (%) = [(Specimen length at break − Specimen length before test)/Specimen length before test] × 100

When the tensile elongation at break of the polymer compound in a state of saturated liquid absorption is 10% or more, the polymer compound has adequate flexibility so that it is easy to suppress detachment of a coating layer formed from a coating resin composition due to volume change of carbon-based negative electrode active material particles at the time of charging and discharging.

The tensile elongation at break is preferably 20% or more and more preferably 30% or more.

Further, a preferred upper limit of the tensile elongation at break is 400%, and a more preferred upper limit is 300%.

An acrylic resin is preferably a resin formed to include a polymer (A1) having an acrylic monomer (a) as an essential constituent monomer.

It is particularly preferable that the polymer (A1) is a polymer of a monomer composition including a monomer (a1) having a carboxyl group or an acid anhydride group and a monomer (a2) represented by the following General Formula (1) as acrylic monomers (a).

[Chem. 1]

$$CH_2 = C(R^1)COOR^2 \qquad (1)$$

[In the Formula (1), $R^1$ represents a hydrogen atom or a methyl group, and $R^2$ represents a linear alkyl group having 4 to 12 carbon atoms or a branched alkyl group having 3 to 36 carbon atoms.]

Examples of the monomer (a1) having a carboxyl group or an acid anhydride group include a monocarboxylic acid having 3 to 15 carbon atoms, such as (meth) acrylic acid (a11), crotonic acid, and cinnamic acid; a dicarboxylic acid having 4 to 24 carbon atoms, such as (anhydrous) maleic acid, fumaric acid, (anhydrous) itaconic acid, citraconic acid, and mesaconic acid; a trivalent, tetravalent, or higher-valent polycarboxylic acid having 6 to 24 carbon atoms, such as aconitic acid, and the like. Among these, (meth) acrylic acid (a11) is preferred, and methacrylic acid is more preferred.

In the monomer (a2) represented by General Formula (1), $R^1$ represents a hydrogen atom or a methyl group. It is preferable that $R^1$ represents a methyl group.

It is preferable that $R^2$ represents a linear or branched alkyl group having 4 to 12 carbon atoms, or a branched alkyl group having 13 to 36 carbon atoms.

(a21) Ester compound in which $R^2$ represents a linear or branched alkyl group having 4 to 12 carbon atoms

Examples of a linear alkyl group having 4 to 12 carbon atoms include a butyl group, a pentyl group, a hexyl group, a heptyl group, an octyl group, a nonyl group, a decyl group, an undecyl group, and a dodecyl group.

Examples of a branched alkyl group having 4 to 12 carbon atoms include a 1-methylpropyl group (sec-butyl group), a 2-methylpropyl group, a 1,1-dimethylethyl group (tert-butyl group), a 1-methylbutyl group, a 1,1-dimethylpropyl group, a 1,2-dimethylpropyl group, a 2,2-dimethylpropyl group (neopentyl group), a 1-methylpentyl group, a 2-methylpentyl group, a 3-methylpentyl group, a 4-methylpentyl group, a 1,1-dimethylbutyl group, a 1,2-dimethylbutyl group, a 1,3-dimethylbutyl group, a 2,2-dimethylbutyl group, a 2,3-dimethylbutyl group, a 1-ethylbutyl group, a 2-ethylbutyl group, a 1-methylhexyl group, a 2-methylhexyl group, a 2-methylhexyl group, a 4-methylhexyl group, a 5-methylhexyl group, a 1-ethylpentyl group, a 2-ethylpentyl group, a 3-ethylpentyl group, a 1,1-dimethylpentyl group, a 1,2-dimethylpentyl group, a 1,3-dimethylpentyl group, a 2,2-dimethylpentyl group, a 2,3-dimethylpentyl group, a 2-ethylpentyl group, a 1-methylheptyl group, a 2-methylheptyl group, a 3-methylheptyl group, a 4-methylheptyl group, a 5-methylheptyl group, a 6-methylheptyl group, a 1,1-dimethylhexyl group, a 1,2-dimethylhexyl group, a 1,3-dimethylhexyl group, a 1,4-dimethylhexyl group, a 1,5-dimethylhexyl group, a 1-ethylhexyl group, a 2-ethylhexyl group, a 1-methyloctyl group, a 2-methyloctyl group, a 3-methyloctyl group, a 4-methyloctyl group, a 5-methyloctyl group, a 6-methyloctyl group, a 7-methyloctyl group, a 1,1-dimethylheptyl group, a 1,2-dimethylheptyl group, a 1,3-dimethylheptyl group, a 1,4-dimethylheptyl group, a 1,5-dimethylheptyl group, a 1,6-dimethylheptyl group, a 1-ethylheptyl group, a 2-ethylheptyl group, a 1-methylnonyl group, a 2-methylnonyl group, a 3-methylnonyl group, a 4-methylnonyl group, a 5-methylnonyl group, a 6-methylnonyl group, a 7-methylnonyl group, a 8-methylnonyl group, a 1, 1-dimethyloctyl group, a 1, 2-dimethyloctyl group, a 1,3-dimethyloctyl group, a 1,4-dimethyloctyl group, a 1,5-dimethyloctyl group, a 1,6-dimethyloctyl group, a 1,7-dimethyloctyl group, a 1-ethyloctyl group, a 2-ethyloctyl group, 1-methyldecyl group, a 2-methyldecyl group, a 3-methyldecyl group, a 4-methyldecyl group, a 5-methyldecyl group, a 6-methyldecyl group, a 7-methyldecyl group, a 8-methyldecyl group, a 9-methyldecyl group, a 1,1-dimethylnonyl group, a 1,2-dimethylnonyl group, a 1,3-dimethylnonyl group, a 1,4-dimethylnonyl group, a 1,5-dimethylnonyl group, a 1,6-dimethylnonyl group, a 1,7-dimethylnonyl group, a 1,8-dimethylnonyl group, a 1-ethylnonyl group, a 2-ethylnonyl group, a 1-methylundecyl group, a 2-methylundecyl group, a 3-methylundecyl group, a 4-methylundecyl group, a 5-methylundecyl group, a 6-methylundecyl group, a 7-methylundecyl group, a 8-methylundecyl group, a 9-methylundecyl group, a 10-methylundecyl group, a 1,1-dimethyldecyl group, a 1,2-dimethyldecyl group, a 1,3-dimethyldecyl group, a 1,4-dimethyldecyl group, a 1,5-dimethyldecyl group, a 1,6-dimethyldecyl group, a 1,7-dimethyldecyl group, a 1,8-dimethyldecyl group, a 1,9-dimethyldecyl group, a 1-ethyldecyl group, a 2-ethyldecyl group, and the like. Among these, particularly, a 2-ethylhexyl group is preferred.

(a22) Ester compound in which $R^2$ is a branched alkyl group having 13 to 36 carbon atoms

Examples of a branched alkyl group having 13 to 36 carbon atoms include a 1-alkylalkyl group [a 1-methyldodecyl group, a 1-butyleicosyl group, a 1-hexyloctadecyl group, a 1-octylhexadecyl group, a 1-decyltetradecyl group, a 1-undecyltridecyl group, or the like], a 2-alkylalkyl group [a 2-methyldodecyl group, a 2-hexyloctadecyl group, a 2-octylhexadecyl group, a 2-decyltetradecyl group, a 2-undecyltridecyl group, a 2-dodecylhexadecyl group, a 2-tridecylpentadecyl group, a 2-decyloctadecyl group, a 2-tetradecyloctadecyl group, a 2-hexadecyloctadecyl group, a 2-tetradecyleicosyl group, a 2-hexadecyleicosyl group, or the like], a 3- to 34-alkylalkyl group (a 3-alkylalkyl group, a 4-alkylalkyl group, a 5-alkylalkyl group, a 32-alkylalkyl group, a 33-alkylalkyl group, a 34-alkylalkyl group, and the like), and mixed alkyl groups including one or more branched alkyl groups, such as residues obtained by excluding hydroxyl groups from oxo alcohols obtainable from a propylene oligomer (7- to 11-mers), an ethylene/propylene (molar ratio 16/1 to 1/11) oligomer, an isobutylene oligomer (7- to 8-mers), an α-olefin (carbon numbers 5 to 20) oligomer (4- to 8-mers), and the like.

It is preferable that the polymer (A1) further contains an ester compound (a3) between a monohydric aliphatic alcohol having 1 to 3 carbon atoms and (meth)acrylic acid.

Examples of the monohydric aliphatic alcohol having 1 to 3 carbon atoms that constitutes the ester compound (a3) include methanol, ethanol, 1-propanol, 2-propanol, and the like.

A content of the ester compound (a3) is, from the viewpoint of suppressing volume change in the carbon-based negative electrode active material particles or the like, preferably 10 to 60% by mass, more preferably 15 to 55% by mass, and even more preferably 20 to 50% by mass, based on a total mass of the polymer (A1).

Further, the polymer (A1) may further contain a salt (a4) of an anionic monomer having a polymerizable unsaturated double bond and an anionic group.

Examples of a structure having the polymerizable unsaturated double bond include a vinyl group, an allyl group, a styrenyl group, a (meth)acryloyl group, and the like.

Examples of the anionic group include a sulfonic acid group, a carboxyl group, and the like.

The anionic monomer having a polymerizable unsaturated double bond and an anionic group is a compound obtainable by combination of these, and examples thereof include vinylsulfonic acid, allylsulfonic acid, styrenesulfonic acid, and (meth)acrylic acid.

Incidentally, the (meth) acryloyl group means an acryloyl group and/or a methacryloyl group.

Examples of a cation that constitutes the salt (a4) of an anionic monomer include lithium ion, sodium ion, potassium ion, ammonium ion, and the like.

When the polymer (A1) contains the salt (a4) of an anionic monomer, a content thereof is, from the viewpoint of internal resistance or the like, preferably 0.1 to 15% by mass, more preferably 1 to 15% by mass, and even more preferably 2 to 10% by mass, based on a total weight of the polymer compound.

It is preferable that the polymer (A1) contains (meth)acrylic acid (a11) and an ester compound (a21), and it is more preferable that the polymer (A1) further contains an ester compound (a3).

It is particularly preferable that the polymer (A1) is a copolymer of methacrylic acid, 2-ethylhexyl methacrylate, and methyl methacrylate, which uses methacrylic acid as the (meth)acrylic acid (a11), uses 2-ethylhexyl methacrylate as the ester compound (a21), and uses methyl methacrylate as the ester compound (a3).

It is preferable that the polymer compound is formed by polymerizing a monomer composition containing (meth)acrylic acid (a11), the monomer (a2), the ester compound (a3) of a monohydric aliphatic alcohol having 1 to 3 carbon atoms and (meth) acrylic acid, and optionally the salt (a4) of an anionic monomer having a polymerizable unsaturated double bond and an anionic group, and having a weight ratio of the monomer (a2) and the (meth)acrylic acid (a11) [the monomer (a2)/the (meth)acrylic acid (a11)] of 10/90 to 90/10.

When the weight ratio of the monomer (a2) and the (meth) acrylic acid (a11) is 10/90 to 90/10, a polymer formed by polymerizing such a composition has satisfactory adhesiveness to a carbon-based negative electrode active material particle and is not easily detachable.

The weight ratio is preferably 30/70 to 85/15, and more preferably 40/60 to 70/30.

Further, as the monomer that constitutes the polymer (A1), in addition to the monomer (a1) having a carboxyl group or an acid anhydride group, the monomer (a2) represented by the General Formula (1), the ester compound (a3) of a monohydric aliphatic alcohol having 1 to 3 carbon atoms and (meth)acrylic acid, and the salt (a4) of an anionic monomer having a polymerizable unsaturated double bond and an anionic group, a radical-polymerizable monomer (a5) that can be copolymerized with the monomer (a1), the monomer (a2) represented by the General Formula (1), and the ester compound (a3) of a monohydric aliphatic alcohol having 1 to 3 carbon atoms and (meth) acrylic acid may also be included within a range that does not adversely affect physical properties of the polymer (A1).

As the radical-polymerizable monomer (a5), a monomer that does not contain activated hydrogen is preferred, and monomers of the following (a51) to (a58) can be used.

(a51) Hydrocarbyl (meth) acrylate formed from a linear aliphatic monool having 13 to 20 carbon atoms, an alicyclic monool having 5 to 20 carbon atoms, or an aromatic aliphatic monool having 7 to 20 carbon atoms and (meth)acrylic acid

Examples of the monool include (i) linear aliphatic monools (tridecyl alcohol, myristyl alcohol, pentadecyl alcohol, cetyl alcohol, heptadecyl alcohol, stearyl alcohol, nonadecyl alcohol, arachidyl alcohol, or the like), (ii) alicyclic monools (cyclopentyl alcohol, cyclohexyl alcohol, cycloheptyl alcohol, cyclooctyl alcohol, or the like), (iii) aromatic aliphatic monools (benzyl alcohol, or the like), and mixture of two or more kinds of these.

(a52) Poly (n= 2 to 30) oxyalkylene (carbon number 2 to 4) alkyl (carbon number 1 to 18) ether (meth)acrylate [(meth)acrylate of a 10-mol ethylene oxide (hereinafter, abbreviated to EO) adduct of methanol, (meth)acrylate of a 10-mol propylene oxide (hereinafter, abbreviated to PO) adduct of methanol, or the like].

(a53) Nitrogen-containing vinyl compound

(a53-1) Amide group-containing vinyl compound

(i) (Meth) acrylamide compound having 3 to 30 carbon atoms, for example, N,N-dialkyl (carbon number 1 to 6) or diaralkyl (carbon number 7 to 15) (meth)acrylamide (N,N-dimethyl acrylamide, N,N-dibenzyl acrylamide, or the like), diacetone acrylamide,

(ii) Amide group-containing vinyl compound having 4 to 20 carbon atoms, except for the (meth) acrylamide compound described above, for example, N-methyl-N-vinylacetamide, cyclic amide [pyrrolidone compound (carbon number 6 to 13, for example, N-vinylpyrrolidone, or the like)].

(a53-2) (Meth)acrylate compound

(i) Dialkyl (carbon number 1 to 4) aminoalkyl (carbon number 1 to 4) (meth)acrylate [N,N-dimethylaminoethyl (meth)acrylate, N,N-diethylaminoethyl (meth)acrylate, t-butylaminoethyl (meth)acrylate, morpholinoethyl (meth)acrylate, or the like]

(ii) Quaternization product (product that has been quaternized using a quaternizing agent such as methyl chloride, dimethylsulfuric acid, benzyl chloride, and dimethyl carbonate) of a quaternary ammonium group-containing (meth)acrylate {tertiary amino group-containing (meth)acrylate [N,N-dimethylaminoethyl (meth)acrylate, N,N-diethylaminoethyl (meth)acrylate, or the like] or the like}.

(a53-3) Heterocyclic ring-containing vinyl compound

Pyridine compound (carbon number 7 to 14, for example, 2- or 4-vinylpyridine), imidazole compound (carbon number 5 to 12, for example, N-vinylimidazole), pyrrole compound (carbon number 6 to 13, for example, N-vinylpyrrole), and pyrrolidone compound (carbon number 6 to 13, for example, N-vinyl-2-pyrrolidone).

(a53-4) Nitrile group-containing vinyl compound

Nitrile group-containing vinyl compound having 3 to 15 carbon atoms, for example, (meth)acrylonitrile, cyanostyrene, and cyanoalkyl (carbon number 1 to 4) acrylate.

(a53-5) Other nitrogen-containing vinyl compounds

Nitro group-containing vinyl compound (carbon number 8 to 16, for example, nitrostyrene) and the like.

(a54) Vinyl hydrocarbons

(a54-1) Aliphatic vinyl hydrocarbon

Olefin having 2 to 18 carbon atoms or more (ethylene, propylene, butene, isobutylene, pentene, heptene, diisobutylene, octene, dodecene, octadecene, or the like), diene having 4 to 10 carbon atoms or more (butadiene, isoprene, 1,4-pentadiene, 1,5-hexadiene, 1,7-octadiene, or the like), or the like.

(a54-2) Alicyclic vinyl hydrocarbon

Cyclic unsaturated compound having 4 to 18 carbon atoms or more, for example, cycloalkene (for example, cyclohexene), (di)cycloalkadiene [for example, (di)cyclopentadiene], terpene (for example, pynene and limonene), and indene.

(a54-3) Aromatic vinyl hydrocarbon

Aromatic unsaturated compound having 8 to 20 carbon atoms or more, for example, styrene, $\alpha$-methylstyrene, vinyltoluene, 2,4-dimethylstyrene, ethylstyrene, isopropylstyrene, butylstyrene, phenylstyrene, cyclohexylstyrene, and benzylstyrene.

(a55) Vinyl ester

Aliphatic vinyl ester [carbon number 4 to 15, for example, alkenyl ester of aliphatic carboxylic acid (mono- or dicarboxylic acid) (for example, vinyl acetate, vinyl propionate, vinyl butyrate, diallyl adipate, isopropenyl acetate, and vinyl methoxyacetate)],
aromatic vinyl ester [carbon number 9 to 20, for example, alkenyl ester of aromatic carboxylic acid (mono- or dicarboxylic acid) (for example, vinyl benzoate, diallyl phthalate, and methyl-4-vinyl benzoate), aromatic ring-containing ester of aliphatic carboxylic acid (for example, acetoxystyrene)].

(a56) Vinyl ether

Aliphatic vinyl ether [carbon number 3 to 15, for example, vinyl alkyl (carbon number 1 to 10) ether (vinyl methyl ether, vinyl butyl ether, vinyl 2-ethylhexyl ether, or the like), vinyl alkoxy (carbon number 1 to 6) alkyl (carbon number 1 to 4) ether (vinyl-2-methoxyethyl ether, methoxybutadiene, 3,4-dihydro-1,2-pyran, 2-butoxy-2'-vinyloxydiethyl ether, vinyl-2-ethyl mercaptoethyl ether, or the like), poly(2 to 4)(meth)allyloxyalkane(carbon number 2 to 6)(diallyloxyethane, triallyloxyethane, tetraallyloxybutane, tetramethallyloxyethane, or the like)],
aromatic vinyl ether (carbon number 8 to 20, for example, vinyl phenyl ether and phenoxystyrene).

(a57) Vinyl ketone

Aliphatic vinyl ketone (carbon number 4 to 25, for example, vinyl methyl ketone and vinyl ethyl ketone), aromatic vinyl ketone (carbon number 9 to 21, for example, vinyl phenyl ketone).

(a58) Unsaturated dicarboxylic acid diester

Unsaturated dicarboxylic acid diester having 4 to 34 carbon atoms, for example, dialkyl fumarate (two alkyl groups are a linear, branched, or alicyclic group having 1 to 22 carbon atoms), and dialkyl maleate (two alkyl groups are a linear, branched, or alicyclic group having 1 to 22 carbon atoms).

Among those listed as examples as (a5), preferred examples from the viewpoint of voltage resistance include (a51), (a52), and (a53) .

Regarding contents of the monomer (a1) having a carboxyl group or an acid anhydride group, the monomer (a2) represented by General Formula (1), the ester compound (a3) of a monohydric aliphatic alcohol having 1 to 3 carbon atoms and (meth) acrylic acid, the salt (a4) of an anionic monomer having a polymerizable unsaturated double bond and an anionic group, and the radical-polymerizable monomer (a5) in the polymer (A1), it is preferable that a content of (a1) is 0.1 to 80% by mass, a content of (a2) is 0.1 to 99.9% by mass, a content of (a3) is 0 to 60% by mass, a content of (a4) is 0 to 15% by mass of (a4), and a content of (a5) is 0 to 99.8% by mass, each based on a weight of the polymer (A1).

When the contents of the monomers are in the above-described ranges, liquid absorptivity to a non-aqueous electrolyte solution can be satisfactory.

A preferred lower limit of a number average molecular weight of the polymer (A1) is 3,000, more preferably 50,000, and even more preferably 60,000, and a preferred upper limit thereof is 2, 000, 000, more preferably 1,500,000, even more preferably 1,000,000, and particularly preferably 120,000.

The number average molecular weight of the polymer (A1) can be determined by gel permeation chromatography (hereinafter, abbreviated to GPC) measurement under the following conditions.

- Apparatus: Alliance GPC V2000 (manufactured by WATERS)
- Solvent: Ortho-dichlorobenzene
- Standard substance: Polystyrene
- Detector: RI
- Sample concentration: 3 mg/ml
- Column stationary phase: PLgel 10 $\mu$m, MIXED-B two columns in series (manufactured by Polymer Laboratories, Ltd.)
- Column temperature: 135°C

The polymer (A1) can be produced by a known polymerization method (bulk polymerization, solution polymerization, emulsion polymerization, suspension polymerization, or the like) using a known polymerization initiator {an azo-based initiator [2,2'-azobis(2-methylpropionitrile), 2,2'-azobis(2,4-dimethylvaleronitrile), or the like)], a peroxide-based initiator (benzoyl peroxide, di-t-butyl peroxide, lauryl peroxide, or the like) or the like}.

An amount of the polymerization initiator used is, from the viewpoint of adjusting the number average molecular weight to a preferred range, or the like, preferably 0.01 to 5% by mass, more preferably 0.05 to 2% by mass, and even more preferably 0.1 to 1.5% by mass, based on a total weight of the monomer(s). A polymerization temperature and polymerization time can be adjusted depending on the kind of the polymerization initiator or the like. The polymerization temperature is preferably -5 to 150°C, (more preferably 30 to 120°C), and the reaction time is preferably 0.1 to 50 hours (more preferably 2 to 24 hours).

As a solvent used in the case of solution polymerization, for example, an ester (carbon number 2 to 8, for example, ethyl acetate and butyl acetate), an alcohol (carbon number 1 to 8, for example, methanol, ethanol, and octanol), a hydrocarbon (carbon number 4 to 8, for example, n-butane, cyclohexane, and toluene), a ketone (carbon number 3 to 9, for example, methyl ethyl ketone), an amide compound (for example, N,N-dimethyl formamide (DMF)), and the like are mentioned. An amount of the solvent used is, from the viewpoint of adjusting the number average molecular weight to a preferred range, or the like, preferably 5 to 900% by mass, more preferably 10 to 400% by mass, and even more preferably 30 to 300% by mass, based on a total weight of the monomer(s). A monomer concentration is preferably 10 to 95% by mass, more preferably 20 to 90% by mass, and even more preferably 30 to 80% by mass.

As a dispersion medium in the case of emulsion polymerization and suspension polymerization, water, an alcohol (for example, ethanol), an ester (for example, ethyl propionate), light naphtha, and the like may be mentioned. Examples of an emulsifier include a higher fatty acid (carbon number 10 to 24) metal salt (for example, sodium oleate and sodium stearate), a higher alcohol (carbon number 10 to 24) sulfuric acid ester metal salt (for example, sodium lauryl sulfate), ethoxylated tetramethyl decynediol, sodium sulfoethyl methacrylate, dimethylaminomethyl methacrylate, and the like. Furthermore, polyvinyl alcohol, polyvinylpyrrolidone, or the like may be added as a stabilizer.

A monomer concentration of a solution or dispersion is preferably 5 to 95% by mass, more preferably 10 to 90% by mass, and even more preferably 15 to 85% by mass, and an amount of a polymerization initiator used is preferably 0.01 to 5% by mass and more preferably 0.05 to 2% by mass, based on a total weight of the monomer(s).

Upon the polymerization, a known chain transfer agent, for example, a mercapto compound (dodecylmercaptan, n-butylmercaptan, or the like) and/or a halogenated hydrocarbon (carbon tetrachloride, carbon tetrabromide, benzyl chloride, or the like) can be used.

The polymer (A1) included in the acrylic resin may be a crosslinked polymer obtained by crosslinking the polymer (A1) with a crosslinking agent (A') having a reactive functional group that reacts with a carboxyl group {preferably, a polyepoxy compound (a'1) [polyglycidyl ether (bisphenol A diglycidyl ether, propylene glycol diglycidyl ether, glycerin triglycidyl ether, and the like), and polyglycidylamine (N,N-diglycidylaniline and 1,3-bis(N,N-diglycidylaminomethyl)) and the like] and/or a polyol compound (a'2) (ethylene glycol or the like)}.

As a method of crosslinking the polymer (A1) using a crosslinking agent (A'), a method which comprises coating the carbon-based negative electrode active material particles with the polymer (A1) and then performing crosslinking may be mentioned. Specifically, a method which comprises mixing carbon-based negative electrode active material particles with a resin solution including a polymer (A1) and removing the solvent to produce carbon-based coated negative electrode active material particles having the carbon-based negative electrode active material particles coated with the polymer (A1), and subsequently mixing a solution including a crosslinking agent (A') with the carbon-based coated negative electrode active material particles and heating the mixture to perform solvent removal and crosslinking reaction, carry out reaction by which the polymer (A1) is crosslinked by the crosslinking agent (A') to become a polymer compound, on the surface of the carbon-based negative electrode active material particles may be mentioned.

A heating temperature can be adjusted depending on kind type of the crosslinking agent. When the polyepoxy compound (a' 1) is used as the crosslinking agent, the heating temperature is preferably 70°C or higher, and when the polyol compound (a'2) is used, the heating temperature is preferably 120°C or higher.

A urethane resin is desirably a urethane resin (B) obtained by reacting an active hydrogen component and an isocyanate component.

Since the urethane resin (B) has flexibility, volume change of an electrode can be alleviated by coating the carbon-based negative electrode active material particles with the urethane resin (B), so that expansion of the electrode can be suppressed.

As the active hydrogen component (b1), it is desirable to contain at least one selected from the group consisting of polyether diol, polycarbonate diol, and polyester diol.

Examples of the polyether diol include polyoxyethylene glycol (hereinafter, abbreviated as PEG), polyoxyethylene oxypropylene block copolymer diol, polyoxyethylene oxytetramethylene block copolymer diol; ethylene oxide adducts of low molecular weight glycol (s) such as ethylene glycol, propylene glycol, 1,4-butanediol, 1,6-hexamethylene glycol, neopentyl glycol, bis(hydroxymethyl)cyclohexane, and 4,4'-bis(2-hydroxyethoxy)-diphenylpropane; condensed polyether ester diols obtained by reacting PEG having a number average molecular weight of 2, 000 or less, with one or more dicarboxylic acids [aliphatic dicarboxylic acids having 4 to 10 carbon atoms (for example, succinic acid, adipic acid, sebacic acid, and the like), aromatic dicarboxylic acids having 8 to 15 carbon atoms (for example, terephthalic acid, isophthalic acid, and the like) and the like]; and mixtures of two or more kinds thereof.

When the polyether diol contains an oxyethylene unit, a content of the oxyethylene unit is preferably 20% by mass, more preferably 30% by mass or more, and even more preferably 40% by mass or more.

Further, examples of the polyether diol may include polyoxypropylene glycol, polyoxytetramethylene glycol (hereinafter, abbreviated as PTMG), polyoxypropylene oxytetramethylene block copolymer diol, and the like.

Among them, PEG, polyoxyethylene oxypropylene block copolymer diol, and polyoxyethylene oxytetramethylene block copolymer diol are preferred, and PEG is particularly preferred.

Further, only one kind of polyether diol may be used, and a mixture of two or more kinds thereof may be used.

Examples of the polycarbonate diol include polycarbonate polyols (for example, polyhexamethylene carbonate diol) produced by condensation of one or two or more of alkylene diols having an alkylene group with 4 to 12 carbon atoms, preferably 6 to 10 carbon atoms, and more preferably 6 to 9 carbon atoms, with a low molecular weight carbonate compound (for example, dialkyl carbonate having an alkyl group with 1 to 6 carbon atoms, alkylene carbonate having an alkylene group with 2 to 6 carbon atoms, diaryl carbonate having an aryl group with 6 to 9 carbon atoms, and the like) while performing dealcoholization.

Examples of the polyester diol include condensed polyester diols obtained by reacting a low molecular weight diol and/or a polyether diol having a number average molecular weight of 1,000 or less with one or more dicarboxylic acids described above, polylactone diols obtained by ring-opening polymerization of a lactone having 4 to 12 carbon atoms, and the like. Examples of the low molecular weight diol include the low molecular weight glycols exemplified in the section of polyether diol, and the like. Examples of the polyether diol having a number average molecular weight of 1, 000 or less include polyoxypropylene glycol, PTMG, and the like. Examples of the lactone include ε-caprolactone, γ-valerolactone, and the like. Specific examples of the polyester diol include polyethylene adipate diol, polybutylene adipate diol, polyneopentylene adipate diol, poly(3-methyl-1,5-pentylene adipate)diol, polyhexamethylene adipate diol, polycaprolactone diol, and mixtures of two or more kinds thereof.

Further, the active hydrogen component (b1) may be a mixture of two or more of polyether diol, polycarbonate diol, and polyester diol described above.

It is desirable that the active hydrogen component (b1) contains a high molecular weight diol (b11) having a number average molecular weight of 2, 500 to 15,000 as an essential component. Examples of the high molecular weight diol (b11) include polyether diol, polycarbonate diol, polyester diol, and the like described above.

The high molecular weight diol (b11) having a number average molecular weight of 2,500 to 15,000 is preferred since hardness of the urethane resin (B) becomes moderately soft, and strength of the coating film formed on the carbon-based negative electrode active material particles increases.

Further, a number average molecular weight of the high molecular weight diol (b11) is more desirably 3,000 to 12,500 and even more desirably 4,000 to 10,000.

The number average molecular weight of a high molecular weight diol (b11) can be calculated from a hydroxyl value of the high molecular weight diol.

The hydroxyl value can be measured according to JIS K1557-1.

Further, it is desirable that the active hydrogen component (b1) contains a high molecular weight diol (b11) having a number average molecular weight of 2,500 to 15,000 as an essential component, and a solubility parameter (hereinafter, abbreviated as SP value) of the high molecular weight diol (b11) is 8.0 to 12.0 (cal/cm$^3$)$^{1/2}$. The SP value of the high molecular weight diol (b11) is more desirably 8.5 to 11.5 (cal/cm$^3$)$^{1/2}$ and even more desirably 9. 0 to 11. 0 (cal/ cm$^3$)$^{1/2}$.

The SP value can be calculated by Fedors method. The SP value can be represented by the following equation.

[Math. 3]

$$SP\ value\ (\delta)\ =\ (\Delta H/V)^{1/2}$$

In the equation, $\Delta H$ represents molar evaporation heat (cal), and V represents molar volume (cm$^3$).

Further, as $\Delta H$ and V, a sum of molar evaporation heat ($\Delta H$) and a sum of molar volume (V) of atomic groups described in "POLYMER ENGINEERING AND SCIENCE, 1974, Vol. 14, No. 2, ROBERT F. FEDORS. (pp. 151 to 153)" can be used.

It is an index representing that polymers having close numerical values are easy to mix with each other (compatibility is high), while polymers having numerical values apart from each other are hard to mix.

The SP value of the high molecular weight diol (b11) of 8.0 to 12.0 (cal/cm$^3$)$^{1/2}$ is preferable in terms of liquid absorption of an electrolyte solution of the urethane resin (B).

Further, it is desirable that the active hydrogen component (b1) contains a high molecular weight diol (b11) having a number average molecular weight of 2,500 to 15,000 as an essential component, and a content of the high molecular weight diol (b11) is 20 to 80% by mass based on a weight of the urethane resin (B). The content of the high molecular weight diol (b11) is more desirably 30 to 70% by mass and even more desirably 40 to 65% by mass.

The content of the high molecular weight diol (b11) of 20 to 80% by mass is preferable in terms of liquid absorption of an electrolyte solution of the urethane resin (B).

Further, it is desirable that the active hydrogen component (b1) has a high molecular weight diol (b11) having a number average molecular weight of 2,500 to 15,000 and a chain extending agent (b13) as essential components.

Examples of the chain extending agent (b13) include low molecular weight diols having 2 to 10 carbon atoms [for example, ethylene glycol (hereinafter, abbreviated as EG), propylene glycol, 1,4-butanediol (hereinafter, abbreviated as 1,4-BG), diethylene glycol (hereinafter, abbreviated as DEG), 1,6-hexamethylene glycol, and the like] ; diamines [aliphatic diamines having 2 to 6 carbon atoms (for example, ethylene diamine, 1,2-propylene diamine, and the like), alicyclic diamines having 6 to 15 carbon atoms (for example, isophoronediamine, 4,4'-diaminodicyclohexylmethane, and the like), aromatic diamines having 6 to 15 carbon atoms (for example, 4,4'-diaminodiphenylmethane, and the like) and the like]; monoalkanolamines (for example, monoethanolamine, and the like); hydrazines or derivatives thereof (for example, adipic acid dihydrazide, and the like) and mixtures of two or more kinds thereof. Among them, preferred are low molecular weight diols, and particularly preferred are EG, DEG, and 1,4-BG.

As the combination of the high molecular weight diol (b11) and the chain extending agent (b13), a combination of PEG as the high molecular weight diol (b11) and EG as the chain extending agent (b13), or a combination of polycarbonate diol as the high molecular weight diol (b11) and EG as the chain extending agent (b13) is preferred.

Further, it is desirable that the active hydrogen component (b1) contains a high molecular weight diol (b11) having a number average molecular weight of 2, 500 to 15,000, a diol (b12) other than the high molecular weight diol (b11), and a chain extending agent (b13), and an equivalent ratio of (b11) to (b12) {(b11)/ (b12)} is 10/1 to 30/1, and an equivalent ratio of (b11) to a total equivalent of (b12) and (b13) {(b11) / [(b12) + (b13)]} is 0.9/1 to 1.1/1.

The equivalent ratio of (b11) to (b12) {(b11)/(b12)} is more desirably 13/1 to 25/1 and even more desirably 15/1 to 20/1.

The diol (b12) other than the high molecular weight diol (b11) is not particularly limited, as long as it is a diol and not contained in the high molecular weight diol (b11) described above, and specific examples thereof include diols having a number average molecular weight of less than 2, 500 and diols having a number average molecular weight of more than 15,000.

Examples of the diol include polyether diol, polycarbonate diol, and polyester diol as described above, and the like.

Incidentally, a low molecular weight diol having 2 to 10 carbon atoms contained in the chain extending agent (b13) that is a diol other than the high molecular weight diol (b11) is not contained in the diol (b12) other than the high molecular weight diol (b11).

As the isocyanate component (b2), one conventionally used in polyurethane production can be used. Such an isocyanates include aromatic diisocyanates having 6 to 20 carbon atoms (except for carbon in an NCO group, the same applies hereafter), aliphatic diisocyanates having 2 to 18 carbon atoms, alicyclic diisocyanates having 4 to 15 carbon atoms, araliphatic diisocyanates having 8 to 15 carbon atoms, modified products of these diisocyanates (carbodiimide modified product, urethane modified product, uretdione modified product, and the like), and mixtures of two or more kinds thereof.

Specific examples of the aromatic diisocyanates include 1,3- or 1,4-phenylene diisocyanate, 2,4- or 2,6-tolylene diisocyanate, 2,4'- or 4,4'-diphenylmethane diisocyanate (hereinafter, diphenylmethane diisocyanate is abbreviated as MDI), 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, and the like.

Specific examples of the aliphatic diisocyanates include ethylene diisocyanate, tetramethylene diisocyanate, hexamethylene diisocyanate, dodecamethylene diisocyanate, 2,2,4-trimethylhexamethylene diisocyanate, lysine diisocyanate, 2,6-diisocyanatomethylcaproate, bis(2-isocyanatoethyl)carbonate, 2-isocyanatoethyl-2,6-diisocyanatohexanoate, and the like.

Specific examples of the alicyclic diisocyanates include isophorone diisocyanate, dicyclohexylmethane-4,4'-diisocyanate, cyclohexylene diisocyanate, methylcyclohexylene diisocyanate, bis(2-isocyanatoethyl)-4-cyclohexylene-1,2-dicarboxylate, 2,5- or 2,6-norbornane diisocyanate, and the like.

Specific examples of the araliphatic diisocyanates include m- or p-xylylene diisocyanate, $\alpha,\alpha,\alpha',\alpha'$-tetramethylxylylene diisocyanate, and the like.

Among them, preferred are aromatic diisocyanates and alicyclic diisocyanates, more preferred are aromatic diisocyanates, and particularly preferred is MDI.

When the urethane resin (B) contains a high molecular weight diol (b11) and an isocyanate component (b2), an equivalent ratio of (b2) / (b11) is preferably 10 to 30/1 and more preferably 11 to 28/1. If the ratio of the isocyanate component (b2) exceeds 30 equivalents, a coating film becomes hard.

When the urethane resin (B) contains a high molecular weight diol (b11), a chain extending agent (b13), and an isocyanate component (b2), an equivalent ratio of (b2)/[(b11) + (b13)] is preferably 0.9 to 1.1/1 and more preferably 0.95 to 1.05/1. If the ratio is out of the range, the urethane resin may not have sufficiently high molecular weight.

A number average molecular weight of the urethane resin (B) is desirably 40,000 to 500,000 and more desirably 50,000 to 400,000. When the number average molecular weight of the urethane resin (B) is 40,000 or more, sufficient strength as a coating film can be obtained, and when the number average molecular weight of the urethane resin (B) is 500,000 or less, solution viscosity is appropriately adjusted and an uniform coating film can be obtained, which is preferable.

The number average molecular weight of the urethane resin (B) is measured by gel permeation chromatography (hereinafter, abbreviated as GPC) using dimethyl formamide (hereinafter, abbreviated as DMF) as a solvent, and using polyoxypropylene glycol as a standard material. A sample concentration may be set to 0.25% by mass, a column stationary phase may be formed by connecting each one of TSKgel SuperH2000, TSKgel SuperH3000, and TSKgel SuperH4000 (all manufactured by Tosoh Corporation), and a column temperature may be set to 40°C.

The urethane resin (B) can be produced by reacting an active hydrogen component (b1) with an isocyanate component (b2).

Examples of the method include a one-shot method which comprises using a high molecular weight diol (b11) and a chain extending agent (b13) as active hydrogen components (b1), and simultaneously reacting an isocyanate component (b2), the high molecular weight diol (b11), and the chain extending agent (b13), and a prepolymer method which comprises reacting a high molecular weight diol (b11) and an isocyanate component (b2), and then reacting with a chain extending agent (b13).

Further, the urethane resin (B) can be produced in the presence or absence of a solvent inert to an isocyanate group. Examples of the appropriate solvent in the case of producing the urethane resin (B) in the presence of a solvent include amide-based solvents [DMF, dimethyl acetamide, and the like], sulfoxide-based solvents (dimethylsulfoxide and the like), ketone-based solvents [methyl ethyl ketone, methyl isobutyl ketone, and the like], aromatic-based solvents (toluene, xylene, and the like), ether-based solvents (dioxane, tetrahydrofuran, and the like), ester-based solvents (ethyl acetate, butyl acetate, and the like), and mixtures of two or more kinds thereof. Among them, preferred are amide-based solvents, ketone-based solvents, aromatic-based solvents, and mixtures of two or more kinds thereof.

In the production of the urethane resin (B), a reaction temperature may be the same as the temperature usually employed in the urethanized reaction. When a solvent is used, it is preferably 20 to 100°C, while when no solvents are used, it is preferably 20 to 220°C.

In order to promote the reaction, a catalyst conventionally used in polyurethane reaction [for example, amine-based catalysts (triethylamine, triethylenediamine, and the like), tin-based catalysts (dibutyltin dilaurate and the like)] can be optionally used.

Further, a reaction terminator [for example, monovalent alcohols (ethanol, isopropanol, butanol, and the like),

14

monovalent amines (dimethylamine, dibutylamine, and the like) and the like] can also be optionally used.

The urethane resin (B) can be produced with a production apparatus conventionally employed in the field. Further, when no solvents are used, a production apparatus such as a kneader or an extruder can be used. The urethane resin (B) produced as described above has a solution viscosity measured as a 30% by mass (solid content) DMF solution of preferably 10 to 10,000 poises/20°C and more preferably 100 to 2,000 poises/20°C.

The silicone resin is a polymer compound having a polydimethylsiloxane skeleton, and commercially available products as a silicone resin can be used.

For example, a straight silicone resin consisting only of an organosiloxane bond, a silicone resin modified with alkyd, polyester, epoxy, acryl, urethane, or the like, and the like are exemplified.

As the straight silicone resin, appropriately synthesized products may be used or commercially available products may be used. Examples of the commercially available products include KR271, KR272, KR282, KR252, KR255, and KR152 (manufactured by Shin-Etsu Chemical Co., Ltd.); SR2400, SR2405, and SR2406 (manufactured by Dow Corning Toray Co., Ltd.); and the like.

As the modified silicone resin, appropriately synthesized products may be used or commercially available products may be used. Examples of the commercially available products include epoxy-modified products (for example, ES-1001N), acrylic-modified silicones (for example, KR-5208), polyester-modified products (for example, KR-5203), alkyd-modified products (for example, KR-206), urethane-modified products (for example, KR-305) (all manufactured by Shin-Etsu Chemical Co., Ltd.); epoxy-modified products (for example, SR2115), alkyd-modified products (for example, SR2110) (all manufactured by Dow Corning Toray Co., Ltd.); and the like.

As the butadiene-based resin, a styrene-butadiene copolymer resin and a butadiene polymer are preferred, and resins which are commercially available as butadiene-based latex (manufactured by DIC Corporation or the like) can be used.

As the butadiene-based latex, for example, butadiene rubber latex, for example, styrene-butadiene-based latex such as styrene-butadiene rubber latex, carboxy-modified styrene-butadiene rubber latex, and styrene-butadiene-vinylpyridine latex, acrylonitrile-butadiene-based latex such as acrylonitrile-butadiene rubber latex, and carboxy-modified acrylonitrile-butadiene rubber latex, acrylate-butadiene rubber latex, and the like are exemplified.

Further, as the butadiene polymer, cured products of resins which are commercially available as liquid polybutadiene, and the like can be used.

As the liquid polybutadiene, those having at least one functional group selected from an epoxy group, a carboxyl group, and a hydroxyl group and containing a 1,4-butadiene unit in 40% by mass or more and preferably 70% by mass or more, and a remaining moiety of the repeating unit consisting of 1, 2-butadiene are preferred. The liquid polybutadiene may additionally contain a monomers other than butadiene such as $\alpha$-methylstyrene and styrene. Regarding a number average molecular weight, those having a number average molecular weight of 500 to 10000, preferably 1000 to 5000, can be suitably used.

As the liquid polybutadiene, epoxidized polybutadiene having an epoxy group introduced into a liquid polybutadiene resin by a modifying agent or the like can be particularly suitable.

Examples of commercially available products of the epoxidized polybutadiene may include EPOLEAD (registered trademark) PB4700 and PB 3600 (all manufactured by Daicel Corporation); JP-100 and JP-200 (all manufactured by Nippon Soda Co., Ltd.); Ricon657 (manufactured by Cray Valley); BF-1000 (manufactured by ADEKA CORPORATION); BLEMMER CP (manufactured by NOF CORPORATION); and the like.

The negative electrode active material layer may further contain a conductive material.

The conductive material is selected from materials having electrical conductivity. Specifically, carbon [graphite and carbon black (acetylene black, Ketjen black (registered trademark), furnace black, channel black, thermal lamp black, or the like), and the like], carbon fibers such as a PAN-based carbon fiber and a pitch-based carbon fiber, carbon nanofiber, carbon nanotube, and metals [nickel, aluminum, stainless steel (SUS), silver, copper, titanium, and the like] can be used.

These conductive materials may be used singly or two or more kinds may be used in combination. Further, alloys or metal oxides thereof may be used. From the viewpoint of electrical stability, aluminum, stainless steel, carbon, silver, copper, titanium, and mixtures thereof are preferred, silver, aluminum, stainless steel, and carbon are more preferred, and carbon is even more preferred. Further, the conductive material may be a material obtained by coating a particulate ceramic material or resin material with a conductive material (the metallic material among the conductive materials described above) by plating or the like. A polypropylene resin kneaded with graphene is also preferred as the conductive material.

An average particle size of the conductive material is not particularly limited; however, from the viewpoint of electric characteristics of a negative electrode for a lithium ion battery, the average particle size is preferably 0.01 to 10 $\mu$m, more preferably 0.02 to 5 $\mu$m, and even more preferably 0.03 to 1 $\mu$m. In the present description, the "average particle size of the conductive material" means a maximum distance L among distances between any arbitrary two points on a contour line of a particle. As a value of the "average particle size of the conductive material", a value calculated as an average value of particle sizes of particles observed in several to several ten visual fields using an observation means such as a scanning electron microscope (SEM) or a transmission electron microscope (TEM) is to be employed.

A shape (form) of the conductive material is not limited to a particulate form, and may be a form other than a particulate form, or, for example, the conductive material may be a fibrous conductive material.

Examples of the fibrous conductive material include a conductive fiber obtained by uniformly dispersing a highly conductive metal or graphite in a synthetic fiber, a metal fiber obtained by fiberizing a metal such as stainless steel, a conductive fiber obtained by coating a surface of an organic fiber with a metal, a conductive fiber obtained by coating a surface of an organic material with a resin containing a conductive material, and the like.

An average fiber diameter of the fibrous conductive material is preferably 0.1 to 20 $\mu$m.

A ratio of a weight of the conductive material to a weight of the negative electrode active material is not particularly limited, but is preferably 0 to 10% by mass.

In the negative electrode for a lithium ion battery of the present invention, it is preferable that a negative electrode active material layer is provided on a negative electrode current collector.

Examples of a material that constitutes the negative electrode current collector include metal materials such as copper, aluminum, titanium, stainless steel, nickel, and alloys thereof, and the like. Among these, from the viewpoints of weight saving, corrosion resistance, and high conductivity, aluminum and copper are more preferred, and aluminum is particularly preferred. The negative electrode current collector may be a current collector formed from calcined carbon, an electroconductive polymer, conductive glass, and the like, or may be a resin current collector formed from a conductive agent and a resin.

A shape of the negative electrode current collector is not particularly limited, but a sheet-shaped current collector formed from the above-described material and a deposition layer formed from fine particles composed of the above-described material may be employed.

A thickness of the negative electrode current collector is not particularly limited, but is preferably 10 to 500 $\mu$m.

As a conductive agent that constitutes the resin current collector, the same material as the conductive material that is an arbitrary component of the negative electrode active material layer can be suitably used.

Examples of the resin that constitutes the resin current collector include polyethylene (PE), polypropylene (PP), polymethylpentene (PMP), polycycloolefin (PCO), polyethylene terephthalate (PET), polyether nitrile (PEN), polytetrafluoroethylene (PTFE), styrene-butadiene rubber (SBR), polyacrylonitrile (PAN), polymethyl acrylate (PMA), polymethyl methacrylate (PMMA), polyvinylidene fluoride (PVdF), an epoxy resin, a silicone resin, mixtures thereof, and the like.

From the viewpoint of electrical stability, polyethylene (PE), polypropylene (PP), polymethylpentene (PMP), and polycycloolefin (PCO) are preferred, and polyethylene (PE), polypropylene (PP), and polymethylpentene (PMP) are more preferred.

Hereinafter, a method for producing a negative electrode for a lithium ion battery of the present invention will be described.

The negative electrode for a lithium ion battery of the present invention can be produced, for example, by forming a negative electrode active material layer on a negative electrode current collector and, if necessary, performing pressurization or the like.

Examples of the method of forming a negative electrode active material layer on a negative electrode current collector include a method which comprises dispersing silicon and/or silicon compound particles and carbon-based negative electrode active material particles at a concentration of 30 to 60% by mass based on the weight of the solvent to prepare a dispersion liquid, applying the dispersion liquid onto a negative electrode current collector using a coating device such as a bar coater, absorbing the solvent by a nonwoven fabric being left to stand still on the active material, or the like, to remove the solvent, and if necessary, performing pressing using a pressing machine.

Incidentally, the negative electrode active material layer obtained by drying the dispersion liquid forming a negative electrode active material layer is not necessarily formed directly on the negative electrode current collector, and a layered product (the negative electrode active material layer) obtained, for example, by applying the above-described dispersion liquid onto a surface of an aramid separator and the like is laminated on the negative electrode current collector, so that the negative electrode for a lithium ion battery of the present invention can also be produced.

A negative electrode active material layer can be formed using particles having a volume average particle size of 0.01 to 10 $\mu$m as the silicon and/or silicon compound particles and particles having a volume average particle size of 15 to 50 $\mu$m as the carbon-based negative electrode active material particles which are used in preparation of the dispersion liquid.

When carbon-based coated negative electrode active material particles are used as the carbon-based negative electrode active material particles, the carbon-based coated negative electrode active material particles can be obtained, for example, by placing carbon-based negative electrode active material particles in a universal mixer, adding dropwise a polymer solution containing a polymer compound thereto over 1 to 90 minutes while being stirred at 30 to 50 rpm, and optionally mixing a conductive material, increasing a temperature to 50 to 200°C while still stirring, reducing a pressure 0.007 to 0.04 MPa, and then maintaining the mixture in that state for 10 to 150 minutes.

A mixing ratio of the carbon-based negative electrode active material particle and the polymer compound is not particularly limited, but a weight ratio of the carbon-based negative electrode active material particle : the polymer compound is preferably 1 : 0.001 to 0.1.

Examples of the solvent include 1-methyl-2-pyrrolidone, methyl ethyl ketone, N,N-dimethyl formamide (DMF), dimethyl acetamide, N,N-dimethylaminopropylamine, tetrahydrofuran, a non-aqueous electrolyte solution to be described later, a non-aqueous solvent to be described later, and the like.

When a lithium ion battery is produced using the negative electrode for a lithium ion battery of the present invention, a lithium ion battery can be produced by a method of combining the negative electrode with a counter electrode, accommodating the electrodes in a cell container together with a separator, pouring a non-aqueous electrolyte solution if necessary, and sealing the cell container, or the like.

Alternatively, a lithium ion battery can be produced by forming a negative electrode active material layer on only one surface of a negative electrode current collector to produce a negative electrode for a lithium ion battery of the present invention, forming a positive electrode active material layer containing a positive electrode active material on the other surface of the negative electrode current collector, to produce a bipolar electrode, laminating the bipolar electrode with a separator, accommodating the laminated product in a cell container, pouring a non-aqueous electrolyte solution if necessary, and tightly sealing the cell container.

As an electrode (positive electrode) that serves as a counter electrode of the negative electrode for a lithium ion battery of the present invention, a positive electrode used in known lithium ion batteries can be used.

Examples of the separator include known separators for lithium ion batteries such as porous films made of polyethylene or polypropylene, laminate films of a porous polyethylene film and a porous polypropylene film, nonwoven fabrics made of synthetic fibers (polyester fibers, aramid fibers, and the like) or glass fibers, and separators having ceramic fine particles such as of silica, alumina, or titania attached to the surface thereof, and the like.

As the non-aqueous electrolyte solution, a non-aqueous electrolyte solution containing an electrolyte and a non-aqueous solvent which has been used in production of a lithium ion battery can be used.

As the electrolyte, an electrolyte that has been used in a known electrolyte solution, or the like can be used. Preferred examples thereof include inorganic acid lithium salt-based electrolytes such as $LiPF_6$, $LiBF_4$, $LiSbF_6$, $LiAsF_6$, and $LiClO_4$, sulfonylimide-based electrolytes having a fluorine atom such as $Li(FSO_2)_2N$ (also abbreviated as LiFSI), $Li(CF_3SO_2)_2N$ (also abbreviated as LiTFSI), and $Li(C_2F_5SO_2)_2N$ (also abbreviated as LiBETI), sulfonylmethide-based electrolytes having a fluorine atom such as $LiC(CF_3SO_2)_3$ (also abbreviated as LiTFSM), and the like.

A concentration of the electrolyte in the non-aqueous electrolyte solution is not particularly limited, but from the viewpoints of handleability of electrolyte solution and battery capacity, is preferably 0.1 to 5 mol/L, more preferably 0.5 to 4 mol/L, and even more preferably 1 to 3 mol/L.

As the non-aqueous solvent, a non-aqueous solvent used in a known electrolyte solution, or the like can be used. For example, a lactone compound, a cyclic or chain carbonic acid ester, a chain carboxylic acid ester, a cyclic or chain ether, a phosphoric acid ester, a nitrile compound, an amide compound, a sulfone, or the like, and mixtures thereof can be used.

Examples of the lactone compound may include 5-membered ring (γ-butyrolactone, γ-valerolactone, and the like) and 6-membered ring lactone compounds (δ-valerolactone and the like), and the like.

Examples of the cyclic carbonic acid ester include propylene carbonate, ethylene carbonate, butylene carbonate, and the like.

Examples of the chain carbonic acid ester include dimethyl carbonate, methylethyl carbonate, diethyl carbonate, methyl-n-propyl carbonate, ethyl-n-propyl carbonate, di-n-propyl carbonate, and the like.

Examples of the chain carboxylic acid ester include methyl acetate, ethyl acetate, propyl acetate, methyl propionate, and the like.

Examples of the cyclic ether include tetrahydrofuran, tetrahydropyran, 1,3-dioxolane, 1,4-dioxane, and the like.

Examples of the chain ether include dimethoxymethane, 1,2-dimethoxyethane, and the like.

Examples of the phosphoric acid ester include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphospholan-2-one, 2-trifluoroethoxy-1,3,2-dioxaphospholan-2-one, 2-methoxyethoxy-1,3,2-dioxaphospholan-2-one, and the like.

Examples of the nitrile compound include acetonitrile and the like. Examples of the amide compound include N,N-dimethyl formamide (hereinafter, also referred to as DMF) and the like. Examples of the sulfone include chain sulfones such as dimethylsulfone and diethylsulfone, cyclic sulfones such as sulfolane, and the like.

The non-aqueous solvent may be used singly or two or more kinds may be used in combination.

Among the non-aqueous solvents, from the viewpoints of battery power output and charge-discharge cycle characteristics, preferred are a lactone compound, a cyclic carbonic acid ester, a chain carbonic acid ester, and a phosphoric acid ester. More preferred are a lactone compound, a cyclic carbonic acid ester, and a chain carbonic acid ester, and particularly preferred is a cyclic carbonic acid ester or a mixed liquid of a cyclic carbonic acid ester and a chain carbonic acid ester. Most preferred is a mixed liquid of ethylene carbonate (EC) and propylene carbonate (PC), a mixed liquid of ethylene carbonate (EC) and dimethyl carbonate (DMC), or a mixed liquid of ethylene carbonate (EC) and diethyl carbonate (DEC).

Examples

Next, the present invention will be described in more detail by means of Examples. Incidentally, unless particularly stated otherwise, part (s) means part (s) by weight, and % means % by mass.

<Production Example 1: Production of carbon fibers>

Carbon fibers were produced by the following method with reference to production method disclosed in Eiichi Yasuda, Asao Oya, Shinya Komura, Shigeki Tomonoh, Takashi Nishizawa, Shinsuke Nagata, Takashi Akatsu, CARBON, 50, 2012, 1432-1434 and Eiichi Yasuda, Takashi Akatsu, Yasuhiro Tanabe, Kazumasa Nakamura, Yasuto Hoshikawa, Naoya Miyajima, TANSO, 255, 2012, pp. 254 to 265.

10 parts by weight of synthetic mesophase pitch AR·MPH [manufactured by MITSUBISHI GAS CHEMICAL COMPANY, INC.] as a carbon precursor and 90 parts by weight of polymethylpentene TPX RT18 [manufactured by Mitsui Chemicals, Inc.] were melted and kneaded at a barrel temperature of 310°C under nitrogen atmosphere using a single-screw extruder to prepare a resin composition.

The resin composition was subjected to melt extrusion and spun at 390°C. The spun resin composition was put in an electric furnace and held at 270°C under nitrogen atmosphere for 3 hours, so that the carbon precursor was stabilized. Subsequently, the temperature of the electric furnace was increased to 500°C over 1 hour and held at 500°C for 1 hour, so that the polymethylpentene was decomposed and removed. The temperature of the electric furnace was increased to 1000°C over 2 hours and held at 1000°C for 30 minutes, so that the remaining stabilized carbon precursor was converted into conductive fibers.

90 parts by weight of the obtained conductive fibers, 500 parts by weight of water, and 1000 parts by weight of zirconia balls ($\phi$0.1 mm) were placed in a pot mill container and pulverized for 5 minutes. The zirconia balls were removed by classification and then dried at 100°C, to obtain carbon fibers.

From the measurement results using SEM, an average fiber diameter of the carbon fibers was found to be 0.3 $\mu$m, an average fiber length thereof was found to be 26 $\mu$m, and thus an aspect ratio thereof was 87. Further, electrical conductivity of the carbon fibers was 600 mS/cm.

<Production Example 2: Preparation of electrolyte solution>

$LiPF_6$ was dissolved at a proportion of 1 M (mol/L) in a mixed solvent of ethylene carbonate (EC) and propylene carbonate (PC) (volume ratio 1 : 1), to prepare an electrolyte solution for a lithium ion secondary battery.

<Production Example 3: Production of positive electrode active material layer>

2 parts by weight of the carbon fibers of Production Example 1 and 98 parts by weight of $LiNi_{0.8}Co_{0.15}Al_{0.05}O_2$ powder as positive electrode active material particles were mixed with the electrolyte solution of Production Example 2, to prepare an electrolyte solution slurry. As a substrate for electrode production, a stainless steel mesh [SUS316 twilled Dutch weave 2300 mesh, manufactured by SUNNET INDUSTRIAL CO., LTD.] was provided. A $\phi$15 mm mask was placed on the stainless steel mesh, the electrolyte solution slurry was added dropwise thereto to have a basis weight amount of 78 mg/cm$^2$, and suction filtration (pressure reduction) was performed to fix the positive electrode active material particles and the carbon fibers on the stainless steel mesh, thereby producing a positive electrode for a lithium ion battery.

<Production Example 4 : Production of carbon-coated silicon particles>

Silicon particles [manufactured by Sigma-Aldrich Japan, volume average particle size 1.5 $\mu$m] were introduced into a horizontal heating furnace, and subjected to chemical vapor deposition operation at 1100°C/1000 Pa for an average residence time of about 2 hours while methane gas was allowed to flow inside the horizontal heating furnace, thereby obtaining silicon-based negative electrode active material particles (volume average particle size 1.5 $\mu$m) having a surface coated with carbon in a carbon amount of 2% by mass.

<Production Example 5: Production of carbon-coated silicon oxide particles>

Silicon oxide particles [manufactured by Sigma-Aldrich Japan, volume average particle size 0.01 $\mu$m] were

introduced into a horizontal heating furnace, and subjected to chemical vapor deposition operation at 1100°C/1000 Pa for an average residence time of about 2 hours while methane gas was allowed to flow inside the horizontal heating furnace, thereby obtaining silicon-based negative electrode active material particles (volume average particle size 0.01 $\mu$m) having a surface coated with carbon in a carbon amount of 2% by mass.

<Production Example 6: Production of silicon composite particles (aggregate (secondary particles) of primary particles having coating layer containing polymer compound and carbon formed on surface of silicon particles)>

3 parts of silicon particles [manufactured by Sigma-Aldrich Japan, volume average particle size 1.5 $\mu$m] was introduced into a universal mixer, HIGH SPEED MIXER FS25 [manufactured by EARTHTECHNICA CO., LTD.], and 10 parts of polyacrylic acid resin solution (solvent: ultrapure water, solid content concentration 10%) as the polymer compound was added dropwise over 2 minutes while being stirred at room temperature at 720 rpm, and then stirring was further continued for 5 minutes. Next, in a state of being stirred, 1 part of acetylene black [manufactured by Denka Company Limited, DENKA BLACK (registered trademark)] as the conductive material (conductive agent) was introduced, and stirring was continued for 30 minutes. Thereafter, while stirring was maintained, pressure was reduced to 0.01 MPa. Subsequently, while stirring and the degree of pressure reduction were maintained, the temperature was increased to 140°C, and stirring, the degree of pressure reduction, and the temperature were maintained for 8 hours, to remove a volatile fraction by distillation. A powder thus obtained was classified with a sieve having a mesh size of 5 $\mu$m, to obtain silicon composite particles (volume average particle size 9.0 $\mu$m).

<Example 1>

[Preparation of negative electrode active material slurry]

8.6 parts of non-graphitizable carbon particles [CARBOTRON (registered trademark), manufactured by Kureha Battery Materials Japan Co., Ltd., volume average particle size 25 $\mu$m], 0.5 parts of silicon particles [manufactured by Sigma-Aldrich Japan, volume average particle size 2.0 $\mu$m], and 1 part of carbon fibers produced in Production Example 1 as the conductive material were added to 89.9 parts of the electrolyte solution of Production Example 2, and then mixed for 1.5 minutes at 2000 rpm using a planetary stirring type mixing and kneading apparatus {AWATORI RENTARO [manufactured by THINKY CORPORATION] }, to prepare a negative electrode active material slurry.

[Production of negative electrode active material layer]

A butyl rubber sheet having a $\phi$15 mm hole formed thereon for electrode forming was disposed on a $\phi$23 mm aramid nonwoven fabric (model No. 2415R: manufactured by Japan Vilene Company, Ltd.) such that the hole of the butyl rubber sheet was disposed at the center of the aramid nonwoven fabric. The obtained negative electrode active material slurry was added dropwise to have a basis weight amount of 39.4 mg/cm$^2$, subjected to suction filtration (pressure reduction), and then pressing for about 10 seconds at a pressure of 5 MPa, to produce a negative electrode active material layer disposed on the aramid nonwoven fabric. A thickness of the produced negative electrode active material layer was 500 $\mu$m.
Further, the negative electrode active material layer was combined with the positive electrode active material layer produced in Production Example 3, to produce a lithium ion battery.

<Example 2>

A negative electrode active material layer was formed in the same manner as in Example 1, except that 0.5 parts of the silicon particles in Example 1 was changed to 1.8 parts of the carbon-coated silicon particles produced in Production Example 4, the carbon particles were changed to 7.2 parts of non-graphitizable carbon particles [CARBOTRON (registered trademark) manufactured by Kureha Battery Materials Japan Co., Ltd., volume average particle size 18 $\mu$m], and 89.9 parts of electrolyte solution was changed to 90 parts. A thickness of the produced negative electrode active material layer was 480 $\mu$m.
Further, the negative electrode active material layer was combined with the positive electrode active material layer produced in Production Example 3, to produce a lithium ion battery.

<Example 3>

A negative electrode active material layer was produced in the same manner as in Example 1, except that 0.5 parts of the silicon particles in Example 1 was changed to 2.7 parts of silicon oxide [manufactured by Sigma-Aldrich Japan, volume average particle size 1.5 $\mu$m], the carbon particles were changed to 6.3 parts of non-graphitizable carbon particles [CARBOTRON manufactured by Kureha Battery Materials Japan Co., Ltd., volume average particle size 22 $\mu$m], and in production of the negative electrode active material layer, the basis weight amount was changed to 78.8 mg/cm$^2$, and 89.9 parts of electrolyte solution was changed to 90 parts. A thickness of the produced negative electrode active material layer was 1000 $\mu$m.

Further, the negative electrode active material layer was combined with the positive electrode active material layer produced by changing a basis weight amount in production of the positive electrode active material layer in Production Example 3 to 156 mg/cm$^2$, to produce a lithium ion battery.

<Example 4>

A negative electrode active material layer was produced in the same manner as in Example 1, except that 0.5 parts of the silicon particles in Example 1 was changed to 4.1 parts of the carbon-coated silicon oxide particles produced in Production Example 5, the carbon particles were changed to 5.1 parts of non-graphitizable carbon particles [CARBOTRON manufactured by Kureha Battery Materials Japan Co., Ltd., volume average particle size 15 $\mu$m], and in production of the negative electrode active material layer, the basis weight amount was changed to 7.9 mg/cm$^2$. A thickness of the produced negative electrode active material layer was 100 $\mu$m.

Further, the negative electrode active material layer was combined with the positive electrode active material layer produced by changing a basis weight amount in production of the positive electrode active material layer in Production Example 3 to 15.6 mg/cm$^2$, to produce a lithium ion battery.

<Example 5>

A negative electrode active material layer was produced in the same manner as in Example 1, except that 0.5 parts of the silicon particles in Example 1 was changed to 0.5 parts of the silicon composite particles produced in Production Example 6. A thickness of the produced negative electrode active material layer was 500 $\mu$m.

Further, the negative electrode active material layer was combined with the positive electrode active material layer produced in Production Example 3, to produce a lithium ion battery.

<Comparative Example 1>

A negative electrode active material layer was produced in the same manner as in Example 1, except that the amount of the silicon particles of Example 1 used was changed to 4.5 parts and the amount of the non-graphitizable carbon particles used was changed to 4.5 parts. A thickness of the produced negative electrode active material layer was 440 $\mu$m.

Further, the negative electrode active material layer was combined with the positive electrode active material layer produced in Production Example 3, to produce a lithium ion battery.

<Comparative Example 2>

5.4 parts of non-graphitizable carbon particles [CARBOTRON (registered trademark) manufactured by Kureha Battery Materials Japan Co., Ltd., volume average particle size 25 $\mu$m], 3.6 parts of silicon particles [manufactured by Sigma-Aldrich Japan, volume average particle size 1.5 $\mu$m], and 1 part of carbon fibers produced in Production Example 1 as the conductive material were added to 85 parts of the electrolyte solution of Production Example 2. Then, a N-methylpyrrolidone solution containing 5 parts of polyvinylidene fluoride (PVdF; binding agent) (manufactured by Sigma-Aldrich) from which the moisture was removed at the time of producing a raw material slurry of the negative electrode was then added thereto. The resultant product was mixed for 5 minutes at 2000 rpm using a planetary stirring type mixing and kneading apparatus {AWATORI RENTARO [manufactured by THINKY CORPORATION]}, to prepare a negative electrode active material slurry. The obtained negative electrode active material slurry was added dropwise to a $\phi$23 mm aramid nonwoven fabric attached with a $\phi$15 mm mask such that a basis weight amount of the slurry would be 39.4 mg/cm$^2$, and subjected to suction filtration (pressure reduction). Subsequently, pressing was performed for about 10 seconds at a pressure of 5 MPa, and drying was performed at 100°C for 15 minutes, to form a negative electrode active material layer. A thickness of the produced negative electrode active material layer was 400 $\mu$m.

Further, the negative electrode active material layer was combined with the positive electrode active material layer produced in Production Example 3, to produce a lithium ion battery.

Lithium ion batteries including the negative electrode for a lithium ion battery of the present invention were produced using the negative electrode active material layer of each of Examples 1 to 5 and Comparative Examples 1 and 2 by the following procedure.

[Production of lithium ion battery]

A terminal (5 mm × 3 cm)-attached copper foil (3 cm × 3 cm, thickness 17 μm) and a terminal (5 mm × 3 cm)-attached aluminum foil (3 cm × 3 cm, thickness 21 μm) were laminated in a direction such that the two terminals came out in the same direction. The laminate was interposed between two sheets of a commercially available thermal fusion type aluminum laminate film (10 cm × 8 cm), and one edge through which the terminals came out was thermally fused, to produce a laminate cell.

The aramid nonwoven fabric was removed from the produced negative electrode active material layer, the negative electrode active material layer was disposed on a copper foil of a laminate cell, 100 μL of the electrolyte solution (obtained in Production Example 2) in the case of Examples 1, 2, and 5 and Comparative Examples 1 and 2, 200 μL of the electrolyte solution in the case of Example 3, and 20 μL of the electrolyte solution in the case of Example 4 were added respectively, a separator (5 cm × 5 cm, thickness 23 μm, Celgard 2500 made of polypropylene (PP)) was disposed on the negative electrode active material layer, and 100 μL of electrolyte solution was added thereto. A stainless steel mesh was removed from the positive electrode active material layer corresponding to each Example and each Comparative Example, the positive electrode active material layer was disposed to face the negative electrode via the separator, and 100 μL of the electrolyte solution (obtained in Production Example 2) in the case of Examples 1, 2, and 5 and Comparative Examples 1 and 2, 200 μL of the electrolyte solution in the case of Example 3, and 20 μL of the electrolyte solution in the case of Example 4 were added respectively. Thereafter, an aluminum foil of a laminate cell was covered on the positive electrode active material layer, and two edges of the laminate cell that orthogonally intersected the one edge that had been previously thermally fused were heat-sealed. Thereafter, the laminate cell was tightly sealed by heat-sealing the opening while the interior of the cell was brought into a vacuum using a vacuum sealer, to obtain a lithium ion battery.

[Measurement of battery characteristics]

The produced lithium ion battery for characteristic measurement was subjected to charging and discharging test using a battery charge/discharge system "HJ0501SM8A" [manufactured by HOKUTO DENKO CORPORATION] by the following method, to determine an increase amount in thickness at the initial charging, and a ratio of charge capacity at the 50th cycle to charge capacity at the first cycle (also called a capacity retention rate after 50 cycles). The results are presented in the following Table 1.

In the measurement of capacity retention rate after 50 cycles, evaluation was conducted in such a manner that a charging and discharging process in which the lithium ion batteries for characteristic measurement are subjected to CC-CV charging at a current of 0.1 C to 4.2 V, rested for 10 minutes, and subjected to CC discharging at a current of 0.1 C to 2.5 V was repeated 50 cycles with resting for 10 minutes under the condition of 45°C.

Further, a change in thickness of the battery at the time of the initial charging (thickness increase) was measured using a contact thickness gauge [ABS Digimatic Indicator ID-CX, manufactured by Mitutoyo Corporation]. A change amount of the thickness of the battery at the time of the initial charging is a value obtained by subtracting a thickness of the battery before the initial charging from a thickness of the battery after the initial charging.

The results are presented in Table 1.

[Table 1]

| | Composition and characteristics of negative electrode active material layer | | | | | | | | Evaluation | |
| | Silicon particles or silicon compound particles | | Carbon-based negative electrode active material particles | | Mass mixing ratio of total of silicon particles or silicon compound particles and carbon-based negative electrode active material particles | Carbon fibers | Binding agent | Thickness [μm] | Evaluation after initial charing | Capacity retention rate after 50 cycles [%] |
| | | | Non-graphitizable carbon particles | | | | PVdF | | | |
| | Volume average particle size [μm] | Used amount [parts by weight] | Volume average particle size [μm] | Used amount [parts by weight] | | Used amount [parts by weight] | Used amount [parts by weight] | | Increase amount in thickness [μm] | |
| Example 1 | 2.0 | 0.5 | 25 | 8.6 | 5/95 | 1 | - | 500 | 3 | 85 |
| Example 2 | 1.5 | 1.8 | 18 | 7.2 | 20/80 | 1 | - | 480 | 5 | 83 |
| Example 3 | 1.5 | 2.7 | 22 | 6.3 | 30/70 | 1 | - | 1000 | 9 | 80 |
| Example 4 | 0.01 | 4.1 | 15 | 5.1 | 45/55 | 1 | - | 100 | 3 | 75 |
| Example 5 | 9.0 | 0.5 | 25 | 8.6 | 5/95 | 1 | - | 500 | 2 | 90 |
| Comparative Example 1 | 2.0 | 4.5 | 25 | 4.5 | 50/50 | 1 | - | 440 | 20 | 45 |
| Comparative Example 2 | 1.5 | 3.6 | 25 | 5.4 | 40/60 | 1 | 5 | 400 | 30 | 40 |

It is noted from the results of Table 1 that the negative electrode for a lithium ion battery of the present invention can suppress expansion of a negative electrode and is excellent in cycle characteristics.

Industrial Applicability

The negative electrode for a lithium ion battery of the present invention is particularly useful as a negative electrode for a bipolar secondary battery, lithium ion batteries, and the like for cellular phones, personal computers, hybrid electric vehicles, and electric vehicles.

Reference Signs List

1      Negative electrode for a lithium ion battery
10     Negative electrode current collector
20     Negative electrode active material layer
30     Silicon and/or silicon compound particles
40     Carbon-based negative electrode active material particles

**Claims**

1.    A negative electrode for a lithium ion battery comprising a negative electrode active material layer,
      wherein the negative electrode active material layer includes a non-bound body of a mixture containing silicon and/or silicon compound particles and carbon-based negative electrode active material particles in a state of being dispersed and mixed to each other,
      a volume average particle size as measured by the method according to the description of the silicon and/or silicon compound particles is 0.01 to 10 $\mu$m,
      a volume average particle size as measured by the method according to the description of the carbon-based negative electrode active material particles is 15 to 50 $\mu$m, and
      a mass mixing ratio of the total of the silicon and silicon compound particles contained in the mixture and the carbon-based negative electrode active material particles is 5 : 95 to 45 : 55.

2.    The negative electrode for a lithium ion battery according to claim 1, wherein a thickness of the negative electrode active material layer is 100 to 1500 $\mu$m.

3.    The negative electrode for a lithium ion battery according to claim 1 or 2, wherein the silicon compound particles are a particle of at least one selected from the group consisting of silicon oxide, carbon-coated silicon oxide, a Si-C complex, a Si-Al alloy, a Si-Li alloy, a Si-Ni alloy, a Si-Fe alloy, a Si-Ti alloy, a Si-Mn alloy, a Si-Cu alloy, and a Si-Sn alloy.

4.    The negative electrode for a lithium ion battery according to any one of claims 1 to 3, wherein the carbon-based negative electrode active material particles include a carbon-based coated negative electrode active material particle having a coating layer formed from a coating resin composition containing a polymer compound, on at least a part of a surface.

5.    The negative electrode for a lithium ion battery according to claim 4, wherein the polymer compound is an acrylic resin, a urethane resin, a silicone resin, a styrene-butadiene copolymer resin, or a butadiene polymer.

6.    The negative electrode for a lithium ion battery according to any one of claims 1 to 5, wherein the volume average particle size as measured by the method according to the description of the silicon and/or silicon compound particles is 1.5 to 10 $\mu$m, and the volume average particle size as measured by the method according to the description of the carbon-based negative electrode active material particles is 18 to 50 $\mu$m.

**Patentansprüche**

1.    Negative Elektrode für eine Lithiumionenbatterie, umfassend eine Negativelektroden-Aktivmaterialschicht;

wobei die Negativelektroden-Aktivmaterialschicht einen nicht gebundenen Körper einer Mischung enthält, die Silicium- und/oder Siliciumverbindungspartikel und Partikel des Negativelektroden-Aktivmaterials auf Kohlenstoffbasis in einem Zustand enthält, in dem sie dispergiert und miteinander gemischt sind; eine volumengemittelte Teilchengröße der Silicium- und/oder Siliciumverbindungspartikel, gemessen durch das Verfahren gemäß der Beschreibung, 0,01 bis 10 $\mu$m beträgt; eine volumengemittelte Teilchengröße der Teilchen des Negativelektroden-Aktivmaterials auf Kohlenstoffbasis, gemessen durch das Verfahren gemäß der Beschreibung, 15 bis 50 $\mu$m beträgt; und ein massenbezogenes Mischungsverhältnis der Gesamtheit der in der Mischung enthaltenen Silicium- und Siliciumverbindungspartikel und des Negativelektroden-Aktivmaterials auf Kohlenstoffbasis auf Kohlenstoffbasis 5:95 bis 45:55 beträgt.

2. Negative Elektrode für eine Lithiumionenbatterie nach Anspruch 1, wobei eine Dicke der Negativelektroden-Aktivmaterialschicht 100 bis 1500 $\mu$m beträgt.

3. Negative Elektrode für eine Lithiumionenbatterie nach Anspruch 1 oder 2, wobei die Siliciumverbindungspartikel ein Partikel von mindestens einem ausgewählt aus der Gruppe bestehend aus Siliciumoxid, kohlenstoffbeschichtetem Siliciumoxid, einem Si-C-Komplex, einer Si-Al-Legierung, einer Si-Li-Legierung, einer Si-Ni-Legierung, einer Si-Fe-Legierung, einer Si-Ti-Legierung, einer Si-Mn-Legierung, einer Si-Cu-Legierung und einer Si-Sn-Legierung sind.

4. Negative Elektrode für eine Lithiumionenbatterie nach einem der Ansprüche 1 bis 3, wobei die Partikel des Negativelektroden-Aktivmaterials auf Kohlenstoffbasis ein beschichtetes Negativelektroden-Aktivmaterialpartikel auf Kohlenstoffbasis mit einer Beschichtungsschicht auf mindestens einem Teil einer Oberfläche, die aus einer Beschichtungsharzzusammensetzung gebildet wird, welche eine Polymerverbindung umfasst.

5. Negative Elektrode für eine Lithiumionenbatterie nach Anspruch 4, wobei die Polymerverbindung ein Acrylharz, ein Urethanharz, ein Silikonharz, ein Styrol-Butadien-Copolymerharz oder ein Butadienpolymer ist.

6. Negative Elektrode für eine Lithiumionenbatterie nach einem der Ansprüche 1 bis 5, wobei die volumengemittelte Teilchengröße der Silicium- und/oder Siliciumverbindungspartikel, gemessen durch das Verfahren gemäß der Beschreibung, 1,5 bis 10 $\mu$m beträgt; und die volumengemittelte Teilchengröße der Teilchen des Negativelektroden-Aktivmaterials auf Kohlenstoffbasis, gemessen durch das Verfahren gemäß der Beschreibung, 18 bis 50 $\mu$m beträgt.

**Revendications**

1. Électrode négative pour une batterie au lithium-ion comprenant une couche de matériau actif d'électrode négative, dans lequel la couche de matériau actif d'électrode négative comprend un corps non lié d'un mélange contenant des particules de silicium et/ou de composé de silicium et des particules de matériau actif d'électrode négative à base de carbone dans un état où elles sont dispersées et mélangées les unes avec les autres, une taille moyenne en volume de particules comme mesuré par le procédé selon la description des particules de silicium et/ou de composé de silicium est de 0,01 à 10 $\mu$m, une taille moyenne en volume de particules comme mesuré par le procédé selon la description des particules de matériau actif d'électrode négative à base de carbone est de 15 à 50 $\mu$m, et un rapport de mélange en masse du total des particules de silicium et de composé de silicium contenues dans le mélange et des particules de matériau actif d'électrode négative à base de carbone est de 5:95 à 45:55.

2. Électrode négative pour une batterie au lithium-ion selon la revendication 1, dans laquelle une épaisseur de la couche de matériau actif d'électrode négative est de 100 à 1 500 $\mu$m.

3. Électrode négative pour une batterie au lithium-ion selon la revendication 1 ou 2, dans laquelle les particules de composé de silicium sont une particule d'au moins un élément choisi parmi le groupe constitué d'oxyde de silicium, oxyde de silicium revêtu de carbone, complexe Si-C, alliage Si-Al, alliage Si-Li, alliage Si-Ni, alliage Si-Fe, alliage Si-Ti, alliage Si-Mn, alliage Si-Cu, et alliage Si-Sn.

4. Électrode négative pour une batterie au lithium-ion selon l'une quelconque des revendications 1 à 3, dans laquelle les particules de matériau actif d'électrode négative à base de carbone comprennent une particule de matériau actif d'électrode négative à base de carbone ayant une couche de revêtement formée à partir d'une composition de résine de revêtement contenant un composé polymère, sur au moins une partie d'une surface.

5. Électrode négative pour une batterie au lithium-ion selon la revendication 4, dans laquelle le composé polymère est une résine acrylique, une résine d'uréthane, une résine de silicone, une résine de copolymère de styrène-butadiène, ou un polymère de butadiène.

6. Électrode négative pour une batterie au lithium-ion selon l'une quelconque des revendications 1 à 5, dans laquelle la taille moyenne en volume de particules comme mesuré par le procédé selon la description des particules de silicium et/ou de composé de silicium est de 1,5 à 10 $\mu$m, et la taille moyenne en volume de particules comme mesuré par le procédé selon la description des particules de matériau actif d'électrode négative à base de carbone est de 18 à 50 $\mu$m.

[FIG. 1]

[FIG. 2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016103337 A
- US 2012189913 A1
- WO 2016035289 A1
- JP 2016066529 A

**Non-patent literature cited in the description**

- **ROBERT F. FEDORS.** *POLYMER ENGINEERING AND SCIENCE,* 1974, vol. 14 (2), 151-153
- **EIICHI YASUDA ; ASAO OYA ; SHINYA KOMURA ; SHIGEKI TOMONOH ; TAKASHI NISHIZAWA ; SHINSUKE NAGATA ; TAKASHI AKATSU.** *CARBON,* 2012, vol. 50, 1432-1434
- **EIICHI YASUDA ; TAKASHI AKATSU ; YASUHIRO TANABE ; KAZUMASA NAKAMURA ; YASUTO HOSHIKAWA ; NAOYA MIYAJIMA.** *TANSO,* 2012, vol. 255, 254-265